# EUROPEAN PATENT APPLICATION

(11) **EP 1 128 616 A2**
(43) Date of publication of application: **29.08.2001**
(21) Application number: 01301549.0
(22) Date of filing: 21.02.2001
(51) Int. Cl.: H04L 12/64

(54) **Communication system, communication device and communication method**

(30) Priority: 23.02.2000 JP 2000052195; 23.02.2000 JP 2000052196
(71) Applicant: SONY CORPORATION, Tokyo 141 (JP)
(72) Inventor: Noda, Takuro, c/o Sony Corporation, Tokyo (JP); Aoki, Yukihiko, c/o Sony Corporation, Tokyo (JP)
(74) Representative: Robinson, Nigel Alexander Julian

(57) **Abstract**

There are provided a communication system, a communication device and a communication method that operate with a reduced load when exchanging data streams by way of a network comprising a serial bus. A communication system according to the invention comprises a serial bus 4 for transmitting data, a magneto-optical disc device 1 and/or an optical device 2 for transmitting data to the serial bus 4 as a periodical isochronous packet and an amplifier 3 adapted to monitor the serial bus 4 for the transmission of an isochronous packet from the magneto-optical disc device 1 or the optical device 2 and start receiving the isochronous packet upon detecting the transmission of an isochronous packet that is available to it.

## Description

This invention relates to a communication system, a communication device and a communication method to be used for transmission of data among a plurality of devices connected to a serial bus.

Devices provided with an interface to be connected to a serial bus typically conforming to the IEEE1394 Standard have been proposed as related prior art.

More specifically, magneto-optical disc devices adapted to recording data to and reproducing data from a magneto-optical disc such as an MD and optical disc devices adapted to reproducing signals from an optical disc such as a CD and provided with an interface for exchanging data with a serial bus according to a predetermined protocol are known.

Such devices that are provided with an interface to be connected to a serial bus can transmit data as a stream to any desired device that is connected to the network comprising the serial bus.

Meanwhile, when exchanging data streams among a plurality of devices connected to a network comprising a serial bus in a concerted manner, a device trying to exchange data streams operates as controller that controls the partner device as target.

Then, the controller has to bear a heavy load of checking and managing all the conditions for exchanging data streams.

Under the above identified circumstances, it is therefore the object of at least preferred embodiments of the present invention to provide a communication system, a communication device and a communication method that operate with a reduced load when exchanging data streams by way of a network comprising a serial bus.

According to the invention, there is provided a communication system comprising:
a bus for transmitting data;
a first device adapted to transmit data as a periodical packet to the bus;
a second device adapted to monitor said transmission of a periodical packet from said first device by way of the bus and start receiving the packet upon detecting the packet as an available packet.

According to the present invention, there is also provided a communication system comprising:
a bus for transmitting data;
a first device adapted to transmit data as a periodical packet to the bus;
a second device adapted to monitor the status of said first device by way of the bus and start receiving the packet upon detecting the status of said first device of being ready for transmitting a periodical packet.

In another aspect of the invention, there is also provided a communication device comprising:
a packet transmission monitoring means for monitoring any transmission of a periodical packet from some other communication device by way of a bus;
a packet receiving means for receiving a periodical packet from said other communication device; and
a control means for causing said packet receiving means to receive the periodical packet from said other communication device upon detecting the packet as an available packet by means of said packet transmission monitoring means.

According to the invention, there is also provided a communication device comprising:
a status monitoring means for monitoring the status of some other communication device;
a packet receiving means for receiving a packet from said other communication device;
a control means for causing said packet receiving means to receive a packet upon detecting the status of said other communication device of being ready for transmitting a periodical packet.

In still another aspect of the invention, there is provided a communication method comprising:
a first step of transmitting data to a data transmission bus as a periodical packet; and a second step of monitoring the periodical packet being transmitted in said first step and starting to receive the packet upon detecting the transmission of the packet as a packet available to it.

According to the present invention, there is also provided a communication method comprising:
a first step of transmitting data to a data transmission bus as a periodical packet; and
a second step of monitoring the status of said first step and starting to receive the packet upon detecting the status of said first step of being ready for transmitting a periodical packet.

In still another aspect of the invention, there is provided a communication system comprising:
a first communication device adapted to transmit data as a periodical packet to a bus;
a second communication device having a packet receiving means for receiving the periodical packet transmitted from said first device;
said first transmission device having:
   a receiving means for receiving the notification request transmitted from said second device and requesting a notification of the status of said first communication device of being ready to start transmitting packets;
   a notification command transmitting means for transmitting a notification command for notifying the status of being ready to start transmitting packets upon receiving said notification request command and coming into a status of being ready to start transmitting a packet; and
   a data transmitting means for transmitting data to said second communication device as a packet;
   said second transmission device having:
      a notification request command transmitting means for generating a notification request command for requesting a notification of the status of said first communication device of being ready to start transmitting a packet and transmitting it to said first communication device;
      a notification command receiving means for receiving a notification command transmitted from said first communication means to notify the status of said first communication device of being ready to start transmitting a packet; and
      a packet receiving means adapted to start receiving a packet from said first device according to the received command.

According to the invention, there is also provided a communication device comprising:
a notification request command transmitting means for generating a notification request command for requesting a notification from some other communication device of the status thereof of being ready to start transmitting a packet and transmitting it to said other communication device;
a notification command receiving means for receiving the notification command transmitted from said other communication device for notifying the status of said other communication device of being ready to start transmitting a packet in response to said notification request command; and
a packet receiving means adapted to start receiving a packet from said other communication device according to said received notification command.

According to the invention, there is also provided a communication device comprising:
a receiving means for receiving the notification request command transmitted from some other communication device for requesting a notification of the status of said communication device of being ready to start transmitting a packet;
a notification command transmitting means for transmitting a notification command for notifying the status thereof of being ready to start transmitting a packet upon receiving said notification request command and becoming ready to start transmitting a packet; and
a data transmitting means for transmitting data to said other communication device as a packet.

In a further aspect of the invention, there is provided a communication method comprising:
a step of generating a notification request command for requesting a notification of the status of some other communication device of being ready to start transmitting a packet and transmitting said request to said other communication device;
a notification command receiving step of receiving the notification command transmitted from said other communication device for notifying the status thereof of being ready to start transmitting a packet in response to said notification request command; and
a packet receiving step of starting to receive a packet from said other communication device according to said received notification command.

According to the invention, there is also provided a communication method comprising:
a receiving step of receiving the notification request command transmitted from some other communication device for requesting a notification of the status of a communication device of being ready to start transmitting a packet;
a notification command transmitting step of receiving said notification request command and transmitting a notification command for notifying the status of said communication device of being ready to start transmitting a packet upon becoming ready to start transmitting a packet; and
a data transmitting step of transmitting data to said other communication device as a packet.

Thus, according to at least preferred embodiments of the invention, in synchronous communications among communication devices having interfaces connected to a serial bus conforming to the IEEE1394 Standards, processing operations can be conducted in a distributed fashion as the devices operate in a concerted manner so that it is no longer necessary for a single controller to control all the devices and all the processing operations. For example, if a plurality of streams are running on the bus, each device trying to catch a stream can determine the stream it actually catches.

Embodiments of the invention will now be described, by way of example only, with reference to the accompany drawings in which:
FIG. 1 is a schematic block diagram of a recording/reproduction device, showing its entire configuration;
FIG. 2 is a schematic block diagram of a magneto-optical disc device that can be used for the purpose of the present invention, showing its configuration;
FIG. 3 is a schematic block diagram of an amplifier that can be used for the purpose of the present invention, showing its configuration;
FIG. 4 is a schematic illustration of the structure of the address space of the CSR architecture;
FIG. 5 is a schematic illustration of a bus that can be used for the purpose of the invention, showing the status thereof after the completion of bus initialization;
FIG. 6 is a schematic illustration of the bus of FIG. 5, showing the status thereof after the completion of tree recognition;
FIG. 7 is a schematic illustration of the bus of FIG. 5, showing the status thereof after a self identification phase;
FIG. 8 is a schematic illustration of addresses, names assigned to them and operations thereof of the CSR architecture;
FIG. 9 is a schematic illustration of the format of a general ROM;
FIG. 10 is a schematic illustration of the bus info block, the root directory and the unit directory in the ROM format of FIG. 9;
FIG. 11 is a schematic illustration of the IEEE1934 protocol, showing its configuration;
FIG. 12 is a schematic illustration of a transaction service;
FIG. 13 is a schematic illustration of a cycle of an IEEE1394 bus;
FIG. 14 is a schematic illustration of a link layer service;
FIG. 15 is a schematic illustration of the format of an isochronous data block packet;
FIG. 16 is a schematic illustration of a CIP header and real time data;
FIG. 17 is a schematic illustration of a CIP header;
FIG. 18 is a schematic illustration of a source packet transfer;
FIG. 19 is a schematic illustration of a CIP header with 2 quadlets;
FIG. 20 is a schematic illustration of assignment of FN codes;
FIG. 21 is a schematic illustration of the format of the header of a source packet;
FIG. 22 is a schematic illustration of the positions of a sequence of data blocks;
FIG. 23 is a schematic illustration of assignment of FMT codes;
FIG. 24 is a schematic illustration of PCRs;
FIGS. 25A through 25D are schematic illustrations of oMPR, oPCR, iMPR and iPCR, showing their respective configurations;
FIG. 26 is a schematic illustration of point-to-point connection of devices that can be used for the purpose of the invention;
FIG. 27 is a schematic illustration of broadcast connection of devices that can be used for the purpose of the invention;
FIG. 28 is a flow chart of an operation of input/output connection that can be used for the purpose of the invention;
FIG. 29 is a flow chart of an operation of releasing an input/output connection that can be used for the purpose of the invention;
FIG. 30 is a schematic illustration of a stack model of an AV/C command;
FIG. 31 is a schematic illustration of the relationship between FCP command and a response to it;
FIG. 32 is a more detailed illustration of the relationship between FCP command and a response to it;
FIG. 33 is a schematic illustration of the data structure of a packet of an AV/C command;
FIGS. 34A through 34C are schematic illustrations of specific examples of AV/C commands;
FIGS. 35A and 35B are schematic illustrations exemplary responses to an AV/C command;
FIG. 36 is a flow chart of a processing operation of a magneto-optical disc device or an optical disc device in the first embodiment of the invention;
FIG. 37 is a flow chart of a processing operation of an amplifier in the first embodiment of the invention;
FIG. 38 is a flow chart of a processing operation of a magneto-optical disc device or an optical disc device in the second embodiment of the invention;
FIG. 39 is a flow chart of a processing operation of an amplifier in the second embodiment of the invention;
FIG. 40 is a schematic illustration of OPEN DESCRIPTOR command;
FIG. 41 is a schematic illustration of an operand of a subfunction;
FIG. 42 is a schematic illustration of READ DESCRIPTOR command;
FIG. 43 is a schematic illustration of a source plug status area information block;
FIG. 44 is a schematic illustration of a plug status information block;
FIG. 45 is a schematic illustration of an ingo block that is nested on a plug_status_info_block and currently defined;
FIG. 46 is a schematic illustration of an operating mode information block;
FIG. 47 is a schematic illustration of an operating_mode field;
FIG. 48 is a flow chart of a processing operation of a magneto-optical disc device or an optical disc device in the third embodiment of the invention;
FIG. 49 is a schematic illustration of the relationship between NOTIFY command and a response to it;
FIG. 50 is a flow chart of a processing operation of a target;
FIG. 51 is a flow chart of a processing operation of an amplifier in the third embodiment of the invention; and
FIG. 52 a flow chart of a processing operation of the controller in the third embodiment of the invention;

Now, the present invention will be described in greater detail by referring to the accompanying drawing that illustrates preferred embodiments of the invention;

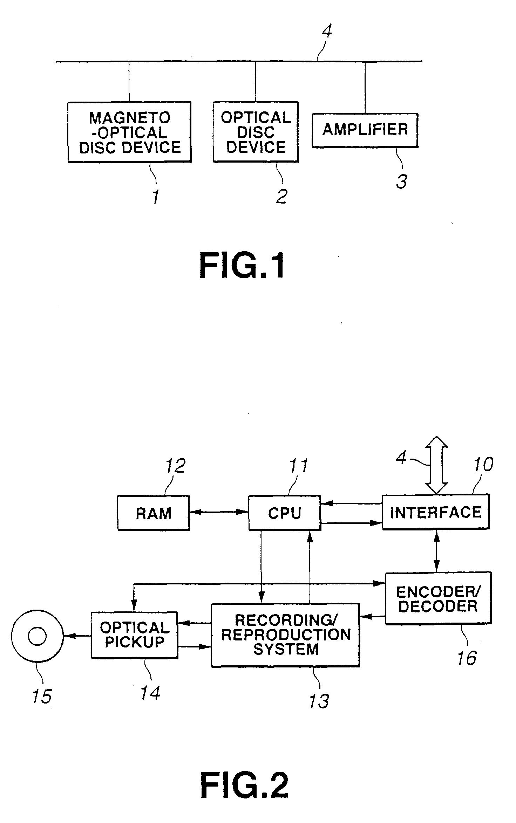

FIG. 1 is a schematic block diagram of the first embodiment of communication system according to the invention and including a recording/reproduction device comprising a magneto-optical disc device 1 for recording data on and reproducing data from a magneto-optical disc such as an main body, an optical disc device 2 for reproducing data from an optical disc such as CD and an amplifier 3 for outputting sound.

To be more accurate, in this embodiment, a plurality of devices including the magneto-optical disc device 1, the optical disc device 2 and the amplifier 3 are connected to a serial bus 4 conforming to the IEEE1934 Standard. The magneto-optical disc device 1 and the optical disc device 2 are adapted to transmits packets of audio signals to the serial bus 4, whereas the amplifier 3 is adapted to receive the packets from the serial bus 4 and output them. The amplifier 3 outputs the packets in synchronism with the reproduction thereof by the magneto-optical disc device 1 and the optical disc device 2.

The magneto-optical disc device 1 and the optical disc device 2 are referred to as the first devices adapted to transmit data as packets, whereas the amplifier is referred to as the second device adapted to receive packets.

Referring now to FIG. 2 illustrating a schematic block diagram of the magneto-optical disc device 1, showing its configuration, CPU (central processing unit) 11 controls the components of the magneto-optical disc device 1. RAM 12 is adapted to store data and programs necessary for the CPU 11 to carry out various processing operations. Interface 10 carries out interface processing operations relating to the serial bus 4. More specifically, the interface 10 transmits the control data fed to it by way of the serial bus 4 to the CPU 11 and outputs PCM (pulse-code modulation) audio data to encoder/decoder 16 adapted to respectively encode/decode such data.

The encoder/decoder carries out operations for encoding PCM audio data fed from the interface 10, using the so-called ATRAC (adaptive transform acoustic coding) technique, and outputs them to recording/reproduction system 13 under the control of the CPU 11.

The CPU 11 controls the recording operation of the recording/reproduction system 13 and the optical pickup 14 according to the control data fed from the amplifier 3. After adding an error correction code to the PCM audio data and performing a predetermined modulating operation, the recording/reproduction system 13 feeds the data to the optical pickup 14 and causes it to record the data in a specified area of the magneto-optical disc 15.

On the other hand, the data reproduced from the magneto-optical disc 15 by the optical pickup 14 is subjected to an error correcting operation and a predetermined demodulating operation at the recording/reproduction system 13 and subsequently fed to the encoder/decoder 16. The encoder/decoder 16 restores the original PCM audio data by performing an adaptive transform acoustic decoding operation on the reproduced data input to it and transmits the restored PCM audio data to the interface 10. The PCM audio data is then sent to the serial bus 4.

Additionally, the CPU 11 sends a control instruction to the serial bus 4 by way of the interface 10.

The optical disc device 2 basically has a configuration similar to that of the magneto-optical disc device 1. Mores specifically, the optical disc device 2 has a configuration realized by replacing the magneto-optical disc 15, the recording/reproduction system 13 and the encoder/decoder 16 respectively by an optical disc, a reproduction system and a decoder.

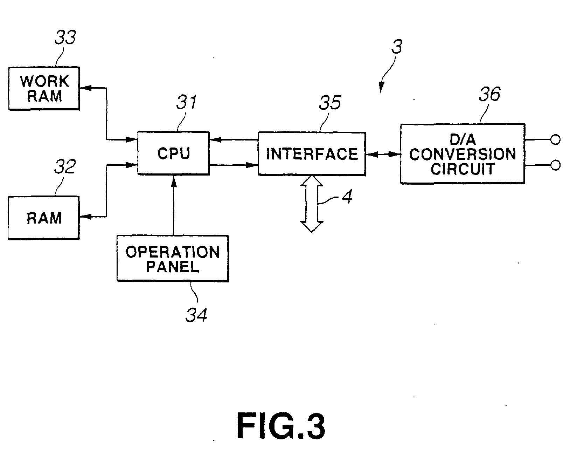

FIG. 3 is a schematic block diagram of the amplifier 3. Referring to FIG. 3, CPU 31 controls all the components of the amplifier 3. RAM 32 stores programs to be executed by the CPU 31. Work RAM 33 stores data necessary for the CPU 31 to carry out various processing operations. Operation panel 34 receives inputs to the amplifier 3 that are made by the user and transfers them to the CPU 31.

Interface 35 carries out interface processing operations on control signals with the CPU 31 and on the PCM audio data with the D/A conversion circuit 36 for the serial bus 4. The D/A conversion circuit 36 converts the packet audio data into an analog audio signal for the left channel and an analog audio signal for the right channel and outputs them to a loudspeaker (not shown).

The IEEE1394 Standards specifying a serial bus 4 to be used for a recording/reproduction device is based on the CSR (control & status register) architecture having an address space of 64 bits as defined in ISO/IEC13213.

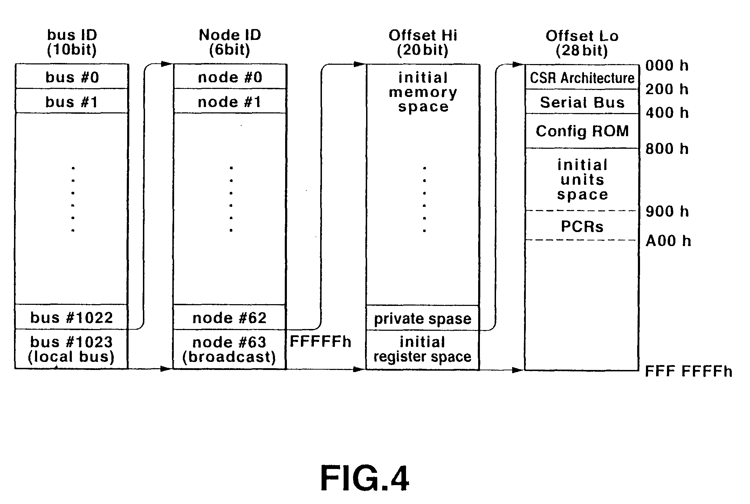

FIG. 4 is a schematic illustration of the structure of the address space of the CSR architecture. Referring to FIG. 4, the 16 bits of the higher orders represent the node ID of the node on each IEEE1394 bus and the remaining 48 bits are used to define the address space given to each node. The higher order 16 bits are further divided into 10 bits representing the bus ID and 6 bits representing the physical ID (node ID in a rigorous sense of the word). Thus, it is possible to specify 1023 buses and 63 nodes because the value expressed by 1s for all the bits is used for a special purpose.

Of the address space of 256 terabytes defined by the 48 lower order bits, the space defined by the higher order 20 bits is divided into a 2048 byte register specific to the CSR, an initial register space to be used as register specific to an IEEE1394, a private space, an initial memory space and so on, whereas the space defined by the lower order 28 bits is used for a configuration ROM (configuration read only memory), an initial unit space to be used for purposes specific to the node and/or a plug control register (PCR) if the space defined by the higher order 20 bits is an initial register space.

Each node is connected in a daisy chain format or a branch format. The connection of a node is automatically recognized and set up. The set up proceeds in the sequence of bus initialization, tree identification and identification of self node ID.

As a node is added to a bus, a bus reset signal changes the state of all the nodes into a special state, where the bus is initialized by clearing all the topology information and the next phase is started. After the initialization of the bus, the information that each node has simply signifies if it is a branch node directly connected a plurality of adjacent nodes, a leaf node having only a single adjacent node or isolated and not connected to any other node.

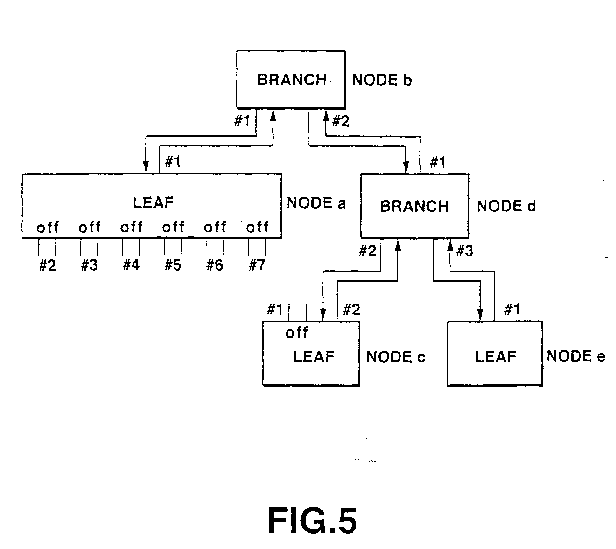

FIG. 5 schematically illustrates a network comprising leaf nodes and branch nodes. In FIG. 5, node a, node c and node e are leaf nodes, whereas node b and nod d are branch nodes.

When the initialization of the bus is completed, a tree recognition process is brought in and the entire topology of the network is transformed into a single tree in that process. During the process, one of the node of the tree is specified as root and all the physical connections connected to the root are directed toward the root node.

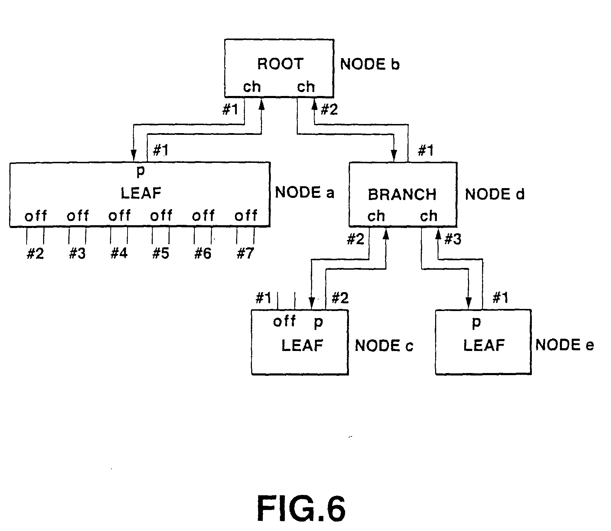

Then, a label is assigned to each of the connected ports to specify a direction. More specifically, as shown in FIG. 6, each port connected closely to the root is labelled as parent (p) port while each port connected remotely from the root is labelled as child (ch) port. Each port that is not connected is labelled as off port.

A node such as the node b, all the connection ports of which are recognized as child ports becomes the root node of the tree. The selection of the root node does not necessarily depend on the topology of the tree and a leaf node may be made to become the root node of the tree.

In the next step, each node is given an opportunity for selecting a physical_ID specific to itself and all the elements to be managed that are annexed to the bus are made to identify themselves. This step is necessary to prepare a topology map of the system that is required to determine the service capacity of each data path in order to realize a low power level management.

A selection process like that of a decision theory is adopted to the self identification process. The root node hands over the media control to the node related to the connection port having the smallest number and stands by until the node transmits an ident_done signal for indicating that the node itself and all of its child nodes have identified themselves. Thereafter, the root node transfers the control to the next higher order port and waits for the completion of the processing operation of the node.

When the nodes related to all the ports of the root node complete the processing operation, the root node identifies itself. The child nodes recursively follows the same process as will be described for the next example. The completion of the self identification process becomes clear when the bus comes into an idle state for a sub-action gap period.

A self identification process is conducted by transmitting a very short self identification packet containing physical_ID and other management information to one to four cables. Physical_ID of a node is a value obtained simply by counting the number of nodes held in a state waiting for receiving self identification information that the node passes by before the node transmits a self identification packet. For example, the node that firstly transmits a self identification packet selects a value of 0 for the physical_ID, and the next node that transmits a self identification packet after the first node selects a value of 1.

The management information contained in the self identification packet includes a gap timer setting up code, a power source code required to drive the related link layer, information on the state (unconnected, connected to a child node, connected to a parent node, etc.) of each of a number of various ports and information on the limitations to the data rate.

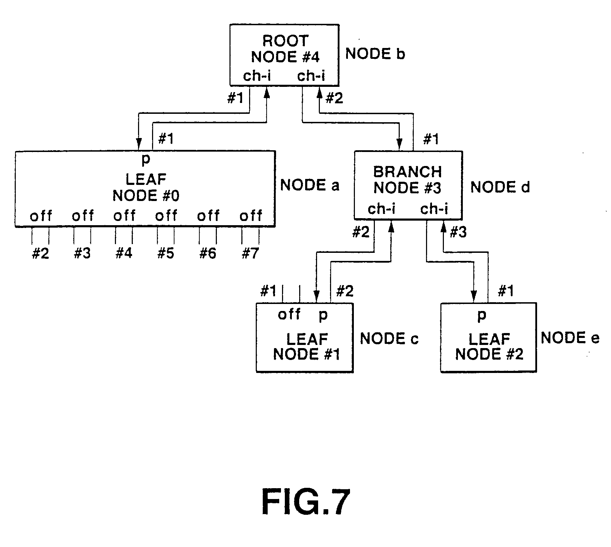

FIG. 7 is a schematic illustration of the bus of FIG. 5, showing the status thereof after a self identification phase. A label of ch-i is assigned to each child port to identify the node connected to the port.

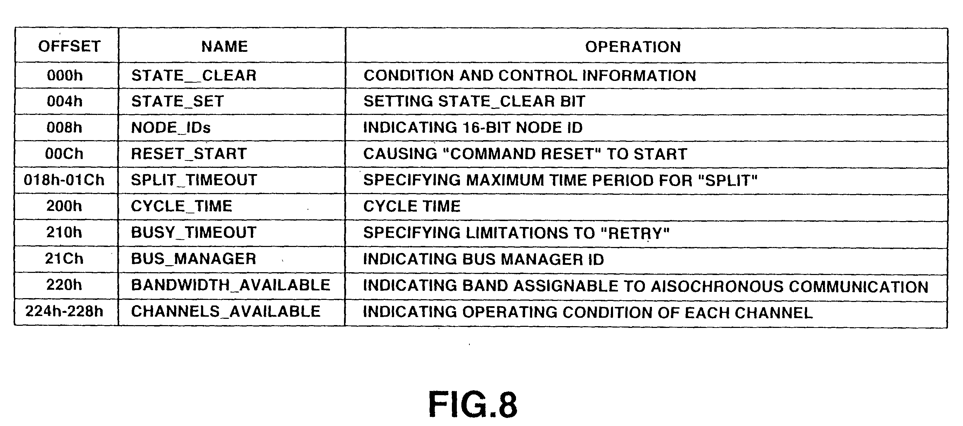

Referring to the initial register space shown in FIG. 4, the CSR architecture is provided as basic architecture for the purpose of node management. FIG. 8 is a schematic illustration of principal offset addresses, names assigned to them and operations thereof of the CSR architecture. The offset addresses of FIG. 8 are those starting from address FFFFF0000000h (a number prefixed by h shows that it is a hexadecimal number) from which the initial register space begins. Bandwidth available register having offset 220h indicates the band that can be assigned to isochronous communications and only the value of the node operating as isochronous manager is made effective. The bandwidth available register stores the largest possible value when no band is assigned to isochronous communications and the value stored in it is decreased each time a band is assigned.

The bits of channels available register having offset 224h through offset 228h correspond respectively to channel numbers from 0 through 63. If a bit is 0, it indicates that the corresponding channel is already assigned. Only the channels available register of the node that is operating as the isochronous resource manager is effective.

Returning to FIG. 4, the configuration ROM based on the format of a general ROM (read only memory) is arranged at addresses 200h through 400h in the initial register space.

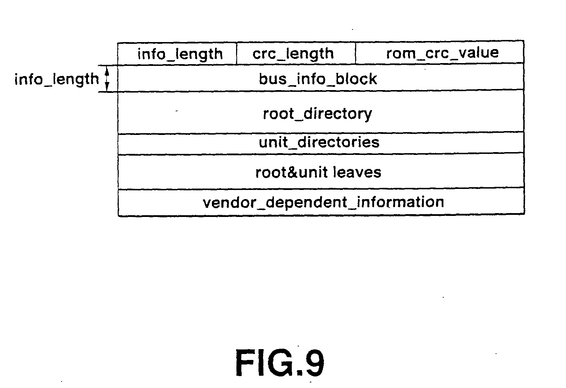

FIG. 9 is a schematic illustration of the format of a general ROM. A node on the IEEE1394 that operates as an access unit can possess a plurality of units that operate isolatedly, commonly using the address space in the node. Unit_directories can be used to indicate versions and positions of the software program for the units. While the position of bus_info_block and that of root_directory are fixed, the positions of all the other blocks are specified by means of offset addresses.

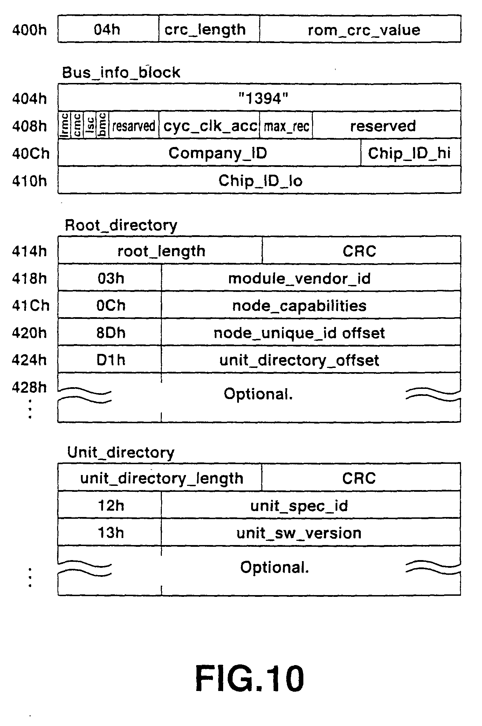

FIG. 10 is a schematic illustration of the bus info block, the root directory and the unit directory in the ROM format of FIG. 9. Company_ID in the bus info block stores the ID number of the device manufacturer. Chip_ID in the bus info block stores the ID of the device that is specific to the device and hence no other device in the world carries the ID. 00h, A0h and 2Dh are written respectively into the first octet, the second octet and the third octet of unit_spec_ID of the unit directory of each device satisfying the requirements of the IEC 1883 Standard. Additionally, 01h and 1 are written respectively into the first octet and the LSB (least significant bit) of the third octet of unit_sw_version (unit switch version).

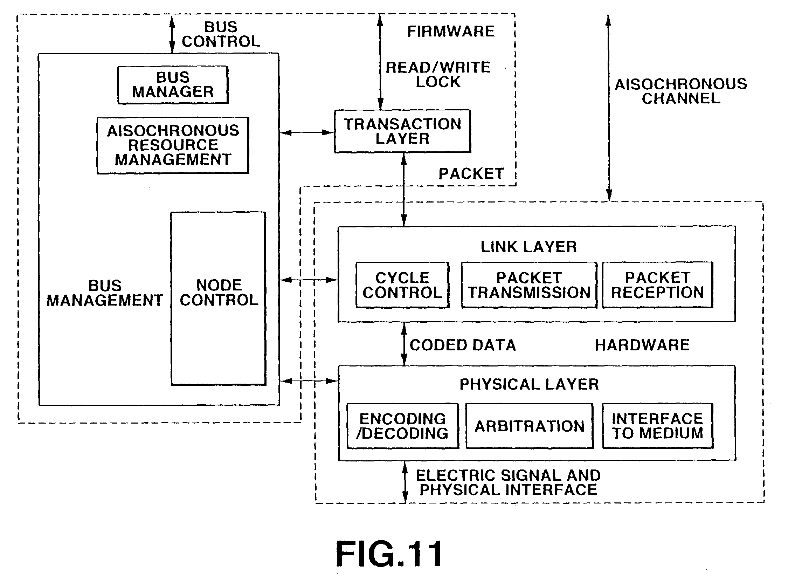

FIG. 11 is a schematic illustration of the IEEE1934 protocol, showing its configuration. As shown in FIG. 11, it comprises a physical layer, a link layer and a transaction layer.

In the protocol, the bus management provides basic functional features for controlling nodes and managing bus resources on the basis of the CSR architecture. There exists a single node on the bus that operates for managing the bus.

The bus managing node provides management functions to the other nodes on the serial bus. The management functions include control of and optimization of the performance of the cycle master, power management, transmission rate management and configuration management.

The bus management functions include three major functions of bus manager, isochronous resource management and node control.

The node control makes inter-node communications possible in the physical layer, in the link layer, in the transaction layer and in the application layer by means of the CSR.

The isochronous resource management is used for synchronous type data transfers, or isochronous transfers, in addition to asynchronous data transfers. More specifically, the isochronous resource management is used for managing the isochronous data transfer function and the allocation of channel numbers. Only a single node exists on the bus to perform these management operations. The node is dynamically selected out of the nodes having an isochronous resource management ability after the initialization phase of the bus.

The node additionally determines the bus management node. In a configuration where no bus management node exists on the bus, the isochronous resource management node is made to partly perform the bus management functions such as that of power management and that of cycle master.

Serial bus management services provided by the bus manager include interface processing operations for controlling the bus for the application. The control interface processing operations include SB_CONTROL.request (serial bus control request), SB_CONTROL.confirmation (serial bus control confirmation) and SB_EVENT.indication (serial bus event indication). SB_CONTROL.request is utilized when requesting bus resetting, bus initialization, bus status information and so on to the bus management from the application. SB_CONTROL.confirmation is used to confirm the result of SB_CONTROL.request and indicate it from the bus management to the application. SB_EVENT.indication is used to indicate the application of the event that occurs asynchronously from the application.

Both synchronous data of an isochronous packet that needs to be transmitted periodically and asynchronous data of an asynchronous packet that can be transmitted and received at any appropriate timing exists simultaneously and synchronous data are guaranteed to be handled on a real time basis in the protocol to be used for data transfers on IEEE1394.

For a data transfer, a processing operation of attribution of requesting and obtaining a licence for the use of the bus is conducted before the transfer.

In the case of an asynchronous transfer, the transmitter node ID and the receiver node ID are transmitted as packet data along with the data to be transferred. The receiver node confirms its own ID and, upon receiving the packet, it sends an acknowledgement signal back to the transmitter node to complete a transaction.

In the case of an isochronous transfer, the transmitter node requests an isochronous channel along with the transmission rate. Then, the channel ID is transmitted as packet data along with the data to be transferred. The receiver node confirms the channel ID it wants and then receives the packet. The number of channels and the transmission rate necessary for the transfer are determined by the application layer.

The process of data exchange of the embodiment is described briefly above. The data transfer protocol is defined by the three layers including the physical layer, the link layer and the transaction layer.

The physical layer is a physical and electric interface relative to the bus and operates for automatic recognition of node connection and for bus arbitrations for the use of the bus among nodes on the bus.

The link layer operates for addressing, data check, packet (isochronous and asynchronous) transmission/reception and cycle control for isochronous transfer of data.

The transaction layer that acts as driver for actually operating the interface also performs processing operations on asynchronous data.

Transaction as used herein include read transactions, write transactions and lock transactions.

In a read transaction, the controller (requesting node) reads the data in the memory at the specific address of the target (responding node). A read transaction may involve a 4-byte quadlet read or a block read of 4 or more than 4 bytes. The requesting node may be referred to as initiator instead of controller.

In a write transaction, the controller writes data in the memory at the specific address of the target. A write transaction may be a quadlet (4 bytes) write or a block (4 or more than 4 bytes) write.

In a lock transaction, the controller transfers reference data and update data to the target and typically performs a swap operation by combining the reference data and the address data of the target and updates the data at the specified address of the target.

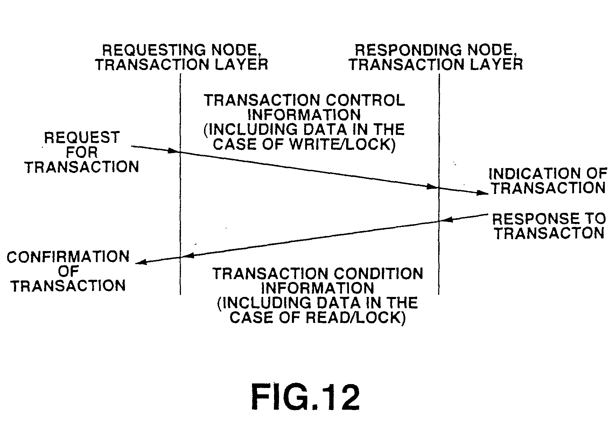

As shown in FIG. 12, in the transaction layer, a read command, a write command or a lock command are realized by means of a request/response protocol on the basis of the CSR architecture.

The request, the support, the response and the confirmation shown in FIG. 12 are so many service units in the transaction layer. The transaction request refers to a packet transfer (TR_DATA request) to the responding node and the transaction indication (TR_DATA indication) refers to a notification that the request is delivered to the responding node, while the transaction response (TR_DATA response) refers to transmission of an acknowledgement and the transaction confirmation (TR_DATA, confirmation) refers to reception of an acknowledgement.

The asynchronous transfer cycle in the transaction layer is 125 µs and the asynchronous packet length is so defined that the data transfer time on the bus is less than 62 µs.

A packet transfer process that is conducted in the link layer is referred to as sub-action, which may be an asynchronous sub-action or an isochronous sub-action.

An asynchronous sub-action is used to transfer asynchronous data. Then, an acknowledgement is transferred from the target (responding node) to the initiator (requesting node).

An isochronous sub-action is used to transfer isochronous data. It does not involve any acknowledgement.

A sub-action includes a arbitration phase, a packet transfer phase and an acknowledgement phase.

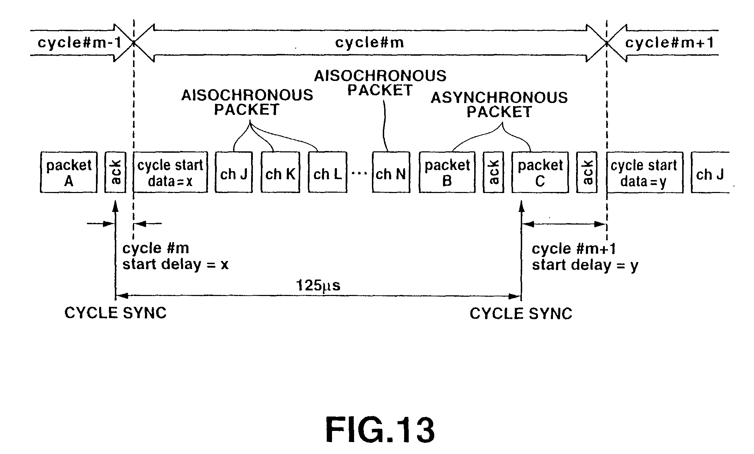

A node referred to as cycle master that generates a cycle of 8kHz (125 µs) exists on the bus (and the root node takes the role thereof). As shown in FIG. 13, the cycle master transmits a cycle start packet at a cycle of 8kHz.

The cycle start packet is broadcast to all the nodes on the bus and each node selects a cycle time within the packet in the cycle timer register. With this arrangement, any temporal discrepancies among the nodes can be regulated if the cycle start packet that is scheduled to arrive at every 125 µs is delayed.

After receiving the cycle start packet, the node that is going to transmit an isochronous packet starts an operation of transmission request and transmits a bus obtaining packet (after an arbitration). A sub-action gap comes when all the nodes complete the transmission of an isochronous packet.

Referring to FIG. 13, on the IEEE1394, data are divided into packets and each packet is transmitted on a time division basis, using a cycle period of 125 µs as reference. The cycle is generated by a cycle start signal supplied from a node operating as cycle master (any of the devices shown in FIG. 1). In the case of an isochronous packet, a band (so referred to although it signifies a time length) from the beginning of a cycle that is necessary for the transmission is secured. With this arrangement, in the case of isochronous transmission, it is guaranteed that any transmission of data is completed within a predetermined period of time. However, note that the data will be lost if a transmission error occurs because there is no arrangement for protecting the data. The above described audio data will be transmitted in an isochronous packet.

The node that secured the bus as a result of a bus arbitration conducted in a time period of each cycle when the bus is not used for isochronous transmission transmits an asynchronous packet. In an asynchronous transmission, while it is guaranteed that data will be transmitted reliably but the timing of transmission will not necessarily be same always.

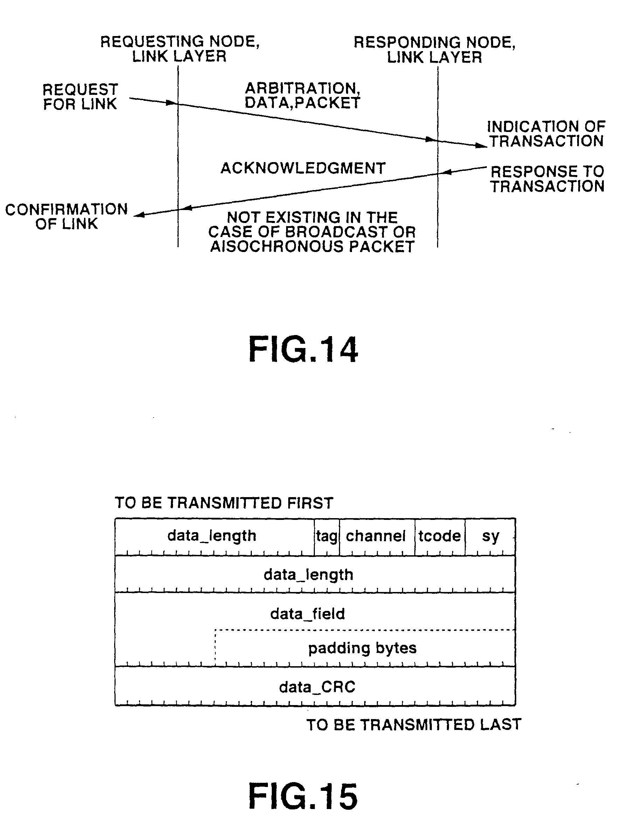

Referring to FIG. 14, as in the case of the transaction layer, the link request (LK_DATA request) for requesting the transfer of a packet to the responding node, the link indication (LK_DATA indication) notifying the responding node of the reception of a packet, the link response (LK_DATA response) for the transmission of an acknowledgement from the responding node and the link confirmation (LK_DATA confirmation) for the reception of an acknowledgement from the requesting node shown in FIG. 14 are so many service units in the link layer.

Data are transmitted in packets as pointed out above, packets that are used for transmitting data are basically categorized into three types, which are the PHY packet of the physical layer and the primary packet and the acknowledgement packet of the link layer.

The PHY packet may be a self ID packet to be used for identifying the self node ID, a PHY configuration packet to be used for optimizing the performance at the time of initializing the bus or a link-on packet to be transmitted to a node (link layer) whose power supply is not automatically turned on.

The acknowledgement packet is an 1-byte packet including ack_code that is sent as response of the responding node to the primary packet (provided that it is not a broadcast packet or an isochronous packet) transmitted from the requesting node.

The primary packet is a packet to be used for transmitting user data and may be an asynchronous packet or an isochronous packet.

Now, referring to FIG. 15 illustrating the sequence of transmission, "data_length" indicating the data length in the data field is arranged firstly in the leading quadlet and then "tag" showing the format of the isochronous packet is arranged thereafter in the quadlet.

The quadlet additionally contains "channel" for identifying the channel through which the isochronous packet is transmitted, "tcode" showing the transaction code that represents the type of the packet and "sy" representing the synchronization code to be used for synchronization of image and sound.

The leading quadlet is followed by "header-CRC (circular redundancy code) of a quadlet, a data field of a unit of quadlet and data-CRC of a quadlet. If the data field contains a value that is not a multiple of 4, the data field is filled with data of 0₁₆ by the transmitting side so that the data field has a length good for filling the entire quadlet.

An asynchronous packet is used typically at the location of the FCP (functional control protocol), which will be described in greater detail hereinafter.

In the case of an IEEE1394 bus, there is provided an AV protocol for transferring AV data on a real time basis, by utilizing an isochronous packet.

The AV protocol is defined as Digital Interface for Consumer Electric Audio/Vidoe Equipment. The AV protocol is used to define the audio/video digital interfaces of electronic consumer products conforming to the IEEE1394 Standard. The protocols of the physical layer, the link layer and the transaction layer substantially conform to the provisions of the IEEE1394 Standard.

The AV protocol principally defines the real time data transfer protocol utilizing isochronous data transfers and the control of isochronous data flows.

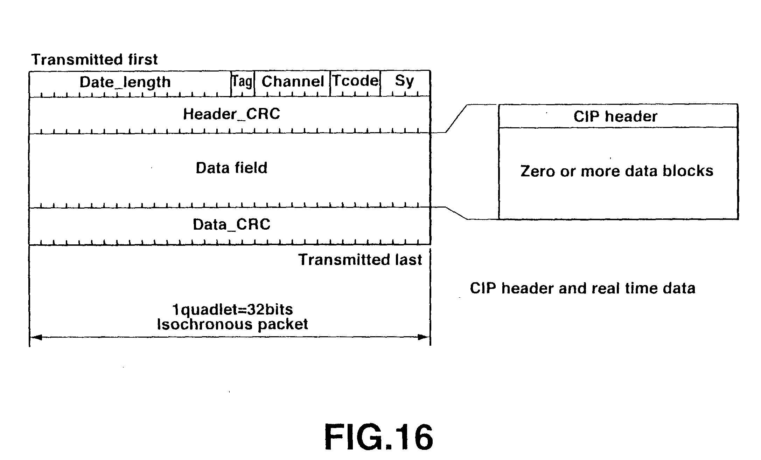

As shown in FIG. 16, the AV protocol for real time data transfers defines a common isochronous packet (CIP). A CIP comprises a CIP header and a data section of real time AV data that follows the CIP header and is stored in the data field of the isochronous packet.

The CIP header is located at the top of the data field of a synchronous packet and contains information on the type of the real time data contained in the data field that follows it.

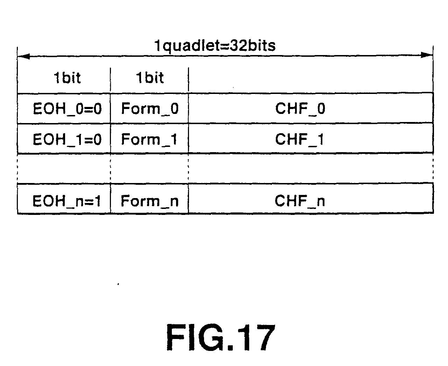

As shown in FIG. 17, the CIP header comprises EOH_n (end of CIP header) indicating the last quadlet of the CIP header, Form_n that indicates the annexational structure of CHF_n when combined with EOH and CHF_n that is the CIP header field of the n-th quadlet.

When EOH_n is equal to "0", it signifies that there is at least another quadlet that follows it. When, on the other hand, EOH_n is equal to "1", it signifies that it is the last quadlet of the CIP header. The annexational structure of CHF_n depends on the structure of EOH_0, Form_0, ..., EOH_n, Form_n.

The protocol is designed to transmit a source packet from an application on a device to the application on another device. The source packet of the transmitter side is based on the assumption that it has a fixed length that is determined as a function of the data type. The data rate is invariable.

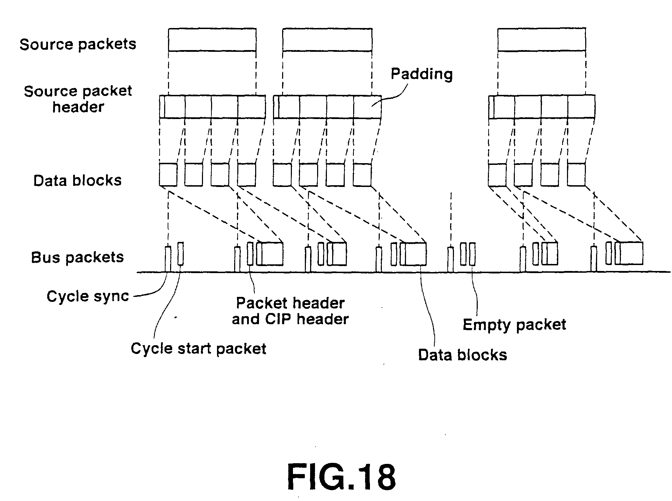

As shown in FIG. 18, the source packet of the transmitter side is transmitted as a plurality of isochronous packets obtained by dividing the source packet into 1, 2, 4 or 8 data blocks. Then, the receiver side collects the data blocks of the isochronous packets, combines them and restores the original data, which is then transmitted to the application.

Since the receiver side of the packets has to restore the original packet by combining the received packets, a time stamp field necessary for restoring the real time data is provided in the CIP header. Once the device is activated, a packet is transferred at every cycle of the packet.

In other words, an empty packet containing only a packet header and a CIP header is transferred if there is no data to be transmitted. The CIP header contains information on the counted value of the transmitted blocks that is to be used to identify any data blocks lost during the packet transfer and on the flags indicating data codes (DVCR, MPEG).

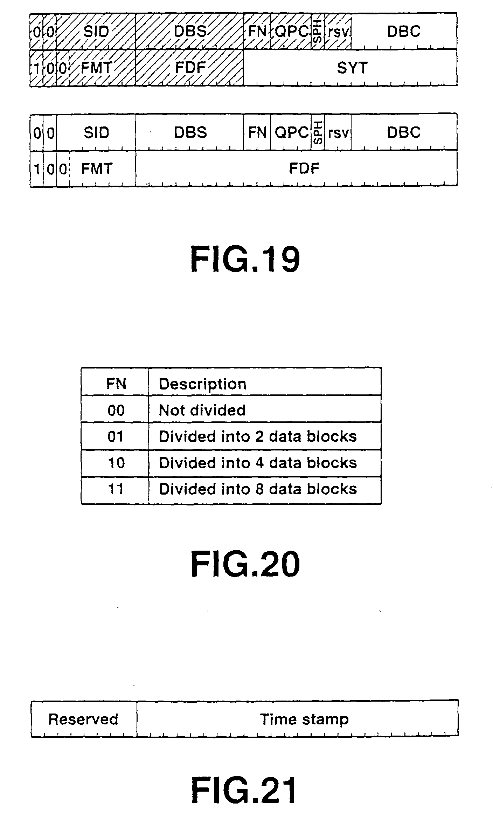

A 2-quadlet CIP header including Form_0=0 and Form_1=0 is defined as standard CIP header for source packets having a fixed length. As shown in FIG. 19, there are two types of 2-quadlet CIP header. The CIP header indicated by A in FIG. 19 has a SYT field, whereas the one indicated by B in FIG. 19 does not. Thus, the format of A having SYT as indicated by A in FIG. 19 is used for transferring a real time data that is identified by an FMT header, where the CIP header needs a time stamp.

In this embodiment, a real time data is transferred by using the format A of FIG. 19. The hatched area in format A is used to determine if the amplifier 3 can reproduce the real time data or not and will be described in greater detail hereinafter.

Each of the CIP headers shown in FIG. 19 has SID (source node ID) that is the node ID of the transmitter side, DBS (data block size in quadlets) that indicates the size of the block size of each quadlet and FN (fraction number) that indicates the number of data packets produced by dividing the source packet.

The maximum payload size in the S100 mode of 100Mbps as defined in the IEEE1394 Standard is 256 quadlets. The DBS field is made to contain 8 bits. If all the 8 bits are so many "0s", it signifies that the payload size is 256 quadlets. The payload size ranges from "00000001₂" to 11111111₂". More specifically, the payload size is defined as follow.
00000000₂ = 256 quadlets
00000001₂ = 1 quadlet
00000010₂ = 2 quadlets
11111111₂ = 255 quadlets

When a broader band width is required as in the case of the S200 mode of 200Mbps or any of the modes of 400Mbps, a plurality of data blocks can be contained in a single packet to be transferred by way of the bus.

As shown in FIG. 20, a number to be used for dividing into data blocks is defined in terms of FN value. More specifically, "00" signifies no division and "01" signifies a division into two data blocks, while "10" signifies a division into 4 blocks and "11" signifies a division into 8 blocks.

A CIP additionally contains QPC (quadlet padding count) indicating the number of the dummy quadlets added to the rear end of each source packet so that the latter may be divided into data blocks of an equal size, the number of dummy quadlets being a value between 0 and 7, SPH (source packet header) indicating if the source packet has a header or not, Rsv (reserved) indicating the data blocks reserved for extensions in the future and DBC (continuity counter of data blocks) that is a continuous counter for identifying any lost data blocks.

The value of QPC is smaller than the number of the data blocks produced by dividing the source packet so that it may be encoded into FN. Similarly, the value of QPC is smaller than the size of a single data block so that it may be encoded into DBS. Therefore, a data block will never be formed only by added quadlets.

If the value of SPH is equal to 1, it indicates that the source packet has a source packet header. The source packet header shown in FIG. 21 contains "Time stamp" arranged immediately after "Reserved".

The value of DBC indicates the first data block that follows the CIP header in the bus packet. The lower order FN bit contain the sequence number in the source packet. The first data block of the source packet always has the sequence number of "0". If FN is equal to "0", all the 8 bits of DBC are used to express the sequence number in the source packet.

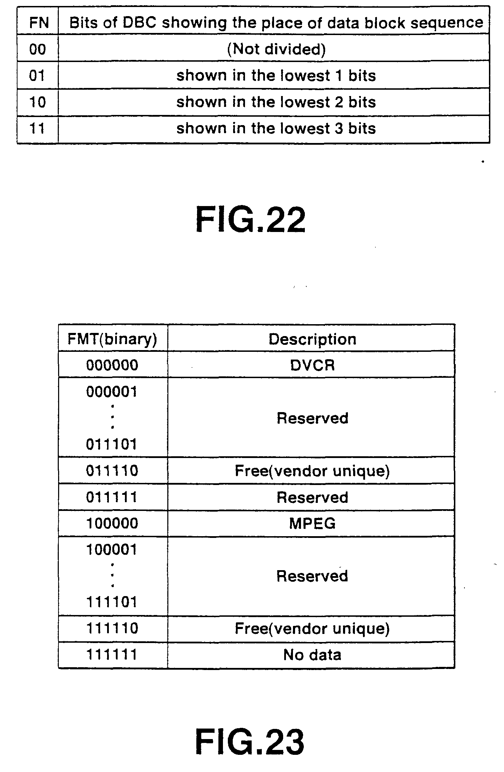

As shown in FIG. 22, the DBC bits indicating the sequential positions of data blocks are defined in correspondence to the FN values. Namely, "00" indicates no division and "01" is shown in the bit of the lowest order, while "10" is shown in the two bits of the lowest order and "11" is shown in the three bits of the lowest order.

Furthermore, the CIP header contains FMT (format ID) for identifying the format, FDF (format dependent field) indicating the field that is dependent on the format and SYT for recording a time stamp.

If FMT is equal to "111111₂" (no data), the fields of DBS, FN, QPC, SPH and DBC are ignored and no data block will be transferred. As shown in FIG. 19 and FIG. 23, the highest order bit of FMT specifies SYT_available/SYT_not_available. FDF is defined for each FMT.

The control of operations such as start and stop of a data flow conforming to the IEEE1394 Standard is based on a concept of plug control registers, which involves the idea of the use of plug for forming a signal path that logically resembles an analog interface. CSR (control and status registers) are used for plug control registers.

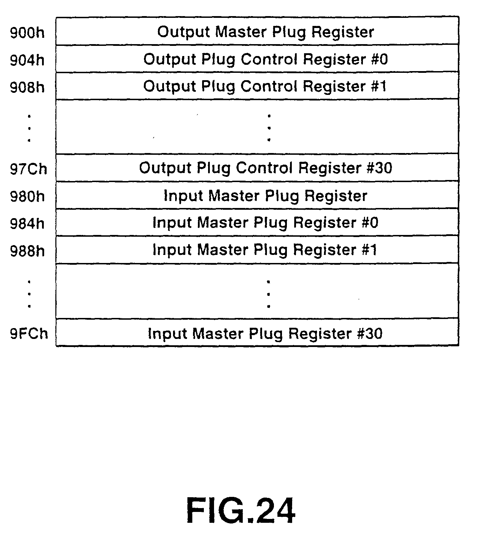

FIG. 24 is a schematic illustration of PCRs, showing the configuration thereof. The PCRs include oPCRs (output plug control registers) showing output plugs and iPCRs (input plug control registers) showing input plugs. Additionally, the PCRs also include oMPR(s) (output master plug register(s)) and iMPR(s) (input master plug register(s)) respectively showing information on the output plug(s) or information on the input plug(s) that are specific to each device. While each device does not possess both a plurality of oMPRs and a plurality of iMPRs at the same time, it can possess both a plurality of oPCRs and a plurality of iPCRs that correspond to respective plugs at the same time. The PCRs shown in FIG. 24 include a total of 31 oPCRs and a total of 31 iPCRs. The flow of isochronous data is controlled by operating the registers corresponding to the plugs involved in the data flow.

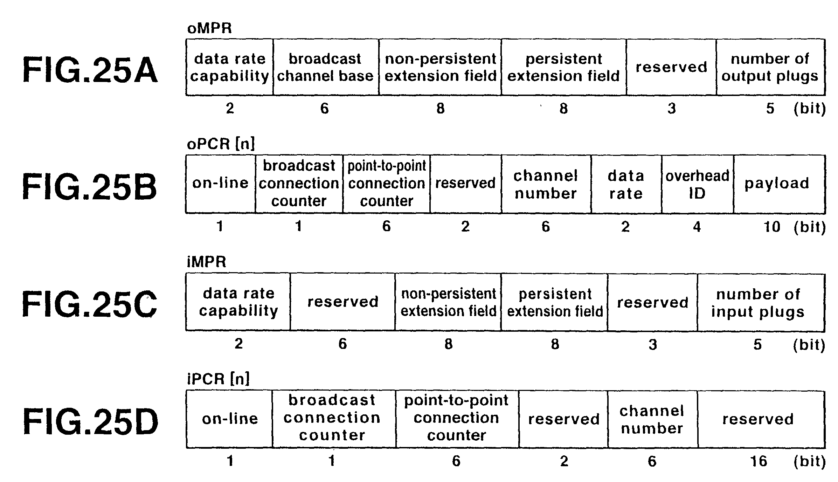

FIGS. 25A through 25D are schematic illustrations of oMPR, oPCR, iMPR and iPCR, showing their respective configurations. More specifically, FIG. 25A shows the configuration of oMPR and FIG. 25B shows that of oPCR, while FIG. 25C shows the configuration of iMPR and FIG. 25D shows that of iPCR. The 2-bit data rate capacility area at the MSB side of oMPR and that of iMPR store respective codes indicating the maximum transmission rates at which the device can transmit and receive isochronous data respectively. The broadcast channel base of oMPR indicates the number of the channel that is used for broadcast outputs.

The 5-bit number of output plugs area at the LSB side of oMPR stores the number of output plugs, or that of oPCRs, that the device possesses. The 5-bit number of input plugs area at the LSB side of oMPR stores the number of input plugs, or that of iPCRs, that the device possesses. The non-persistent extension field and the persistent extension field are areas defined for extensions in the future.

The on-line area of at the MSB side of oPCR and that of iPCR indicate the operating condition of each of the plugs. More specifically, if the value there is 1, it indicates that the plug is ON-LINE. On the other hand, if the value there is 0, it indicates that the plug is OFF-LINE. The value of the broadcast connection counter of oPCR and that of iPCR indicate the presence (1) or absence (0) of a broadcast connection. The value of the 6-bit point-to-point connection counter of oPCR and that of iPCR indicate the number of point-to-point connections that the respective plugs have.

The value of the 6-bit channel number of oPCR and that of iPCR indicate the number of isochronous channels that the respective plugs have.

The value of the 2-bit data rate of oPCR indicates the real transmission rate of packets of output from the plug. The code stored in the 4-bit overhead ID of oPCR indicates the band width of the overhead of isochronous communication. The value of the 10-bit payload area of the oPCR indicates the maximum value of the data contained in an isochronous packet that the plug can handle.

In order to transfer isochronous data from a device to another device by way of a serial bus conforming to the IEEE1394 Standard, it is necessary to connect the output plug of the device transmitting the data and the input plug of the device receiving the data by way of an isochronous channel.

The connection of an input plug and an output plug by way of an isochronous channel is referred to as point-to-point connection. An point-to-point connection is released by the application that is used to realize the connection.

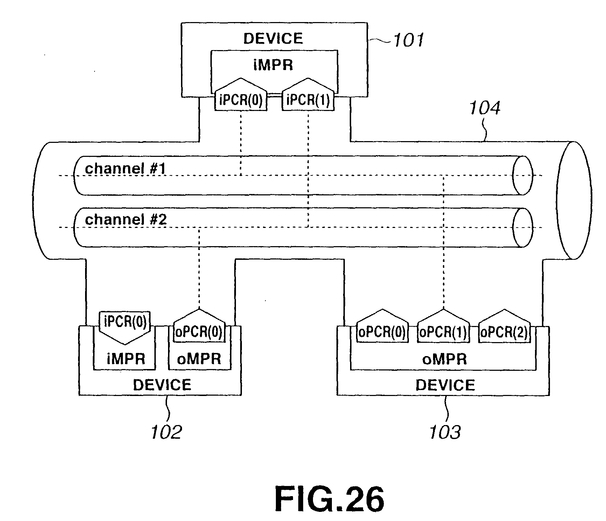

FIG. 26 is a schematic illustration of point-to-point connection of devices that can be used for the purpose of the invention. Referring to FIG. 26, first device 101, second device 102 and third device 103 are connected to each other by way of a serial bus conforming to the IEEE1394 Standard.

The iPCR[0] of the first device 101 and the oPCR[1] of the third device 103 are connected to each other by point-to-point connection by way of channel #1. Each of the broken lines in FIG. 26 indicates an isochronous data flow.

The iPCR[1] of the first device 101 and the oPCR[0] of the second device 102 are connected to each other by point-to-point connection by way of channel #1.

A broadcast connection may also be used for transferring data by way of a serial bus.

A broadcast connection is used to link an input plug or an output plug to an isochronous channel. The connection of an output plug and an isochronous channel is referred to as broadcast-out connection, whereas the connection of an input plug and an isochronous channel is referred to as broadcast-in connection. A broadcast connection can be established only by a device having a plug but can be released by some other device.

A broadcast-out connection can be established at an output plug and a broadcast-in connection can be established at an input plug. A broadcast connection and a plurality of point-to-point connections can be connected to a single plug at the same time.

A same isochronous channel is used to all the connections to a plug and used to transfer a same isochronous data flow. A plurality of independent applications can establish respective point-to-point connections between a same input plug and a same output plug.

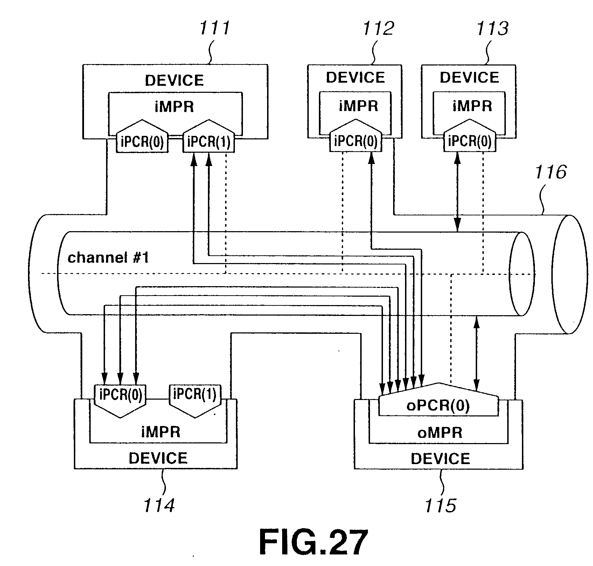

FIG. 27 is a schematic illustration of broadcast connection of devices that can be used for the purpose of the invention. Referring to FIG. 27, first device 111, second device 112, third device 113, fourth device 114 and fifth device 115 are connected to bus 116 conforming to the IEEE1394 Standard. Each of the broken lines in FIG. 27 indicates an isochronous data flow.

The iPCR[1] of the first device 111 and the oPCR[0] of the fifth device 115 are connected to each other by two point-to-point connections. The iPCR[1] of the second device 113 and the oPCR[0] of the fifth device 115 are connected to each other by a point-to-point connection. The iPCR[0] of the fourth device 114 and the oPCR[0] of the fifth device 115 are connected to each other by way of three point-to-point connections.

The oPCR[0] of the fifth device 115 is connected to the channel #1 by broadcast-out connection. Additionally, the iPCR[1] of the first device 111, the iPCR[0] of the second device 112, the iPCR[0] of the third device 113 and the iPCR[0] of the fourth device 114 are connected to the channel #1 by broadcast-in connection.

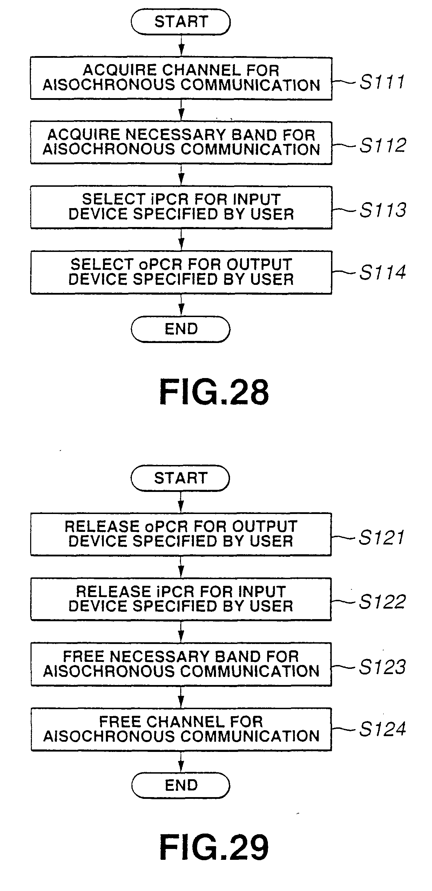

Now, the operation of connecting devices by point-to-point connection will be described by referring to FIG. 28.

Firstly, in Step S111, the node operating as isochronous resource manager for establishing input/output connections is requested to acquire a channel for isochronous communications. Then, the node operating as isochronous resource manager sets 0 to the bit corresponding to an idle channel in the channels available register of CSR in response to the request. Then, in Step S112, the node operating as isochronous resource manager is requested to acquire a band necessary for isochronous communications. Then, the node operating as isochronous resource manager decreases the value of the band widths available register of CSR by a numerical value corresponding to the requested band in response to the request.

Thereafter, in Step S113, an idle iPCR (iPCR[j]) is selected out of the iPCRs of the input device and then the number of the isochronous channel to be used (the channel number acquired in Step S111) is selected as channel number. Then, 1 is set to the point-to-point connection counter of the device. In Step S114, an idle oPCR (oPCR[k]) is selected out of the oPCRs of the output device specified by the user and then the number same as the one selected for the iPCR[j] is selected as channel number. Then, 1 is set to the point-to-point connection counter of the device.

As a result of the above operation, a channel, a band, an output plug and an input plug are secured for the point-to-point connection. Then, data are transmitted from the output plug of the specified output device to the input plug of the specified input device by means of the channel and the band that are secured for the data transmission.

FIG. 29 is a flow chart of an operation of releasing an input/output connection that can be used for the purpose of the invention. Referring to FIG. 29, in Step S121, the channel number of the oPCR[k] and the point-to-point connection counter of the output device are cleared and thus the oPCR[k] is freed to become an idle oPCR. Then, in Step S122, the channel of the iPCR[j] and the point-to-point counter of the input device specified by the user are cleared and thus the iPCR[j] is freed to become an idle iPCR.

Then, in Step S123, the node operating as isochronous resource manager is requested to free the band necessary for isochronous communications. The node operating as isochronous resource manager adds a predetermined numerical value corresponding to the band to be freed to the value that the band widths available resister of CSR has. Then, in Step S124, the node operating as isochronous resource manager is requested to free the channel necessary for isochronous communications. The node operating as isochronous resource manager sets 1 to the corresponding bit of the channels available register of CSR in response to the request.

A functional control protocol (FCP) is provided to control a device according to the provisions of the IEEE1394 Standard. An asynchronous packet as defined by the IEEE1394 Standard is used to transmit and respond to a control command.

An AV/C command set to be used for controlling AV devices will be described below as an example of FCP.

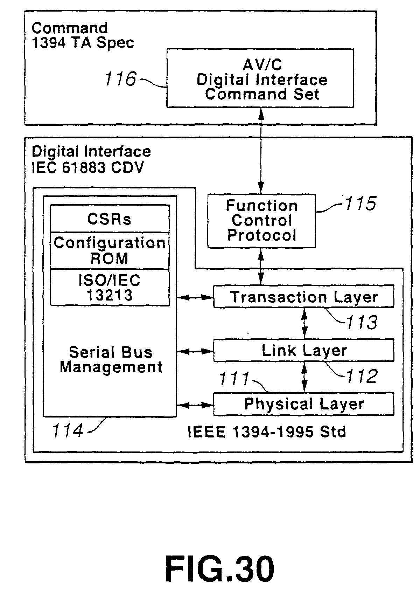

FIG. 30 is a schematic illustration of a stack model of an AV/C command. In FIG. 30, there are shown a physical layer 111, a link layer 112, a transaction layer 113 and a serial bus management 114 that conform to the IEEE1394 Standard. In FIG. 30, FCP 115 conforms to the IEC61883 Standard and AV/C command set 116 conforms to the 1394TA specification.

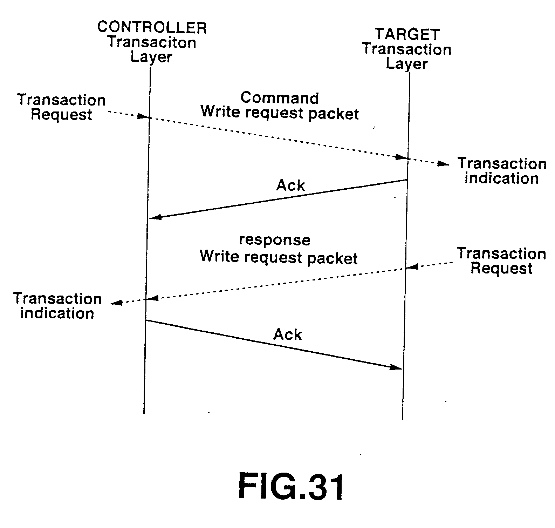

FIG. 31 is a schematic illustration of the relationship between a command of the FCP 115 of FIG. 30 and a response to it. Referring to FIG. 31, there are a controller and a target that is controlled by the controller. A command of the FCP and a response to it are exchanged between two nodes in a write transaction of asynchronous communication according to the IEEE1394 Standard. Upon receiving data, the target sends an acknowledgement to the controller to confirm the reception of the data.

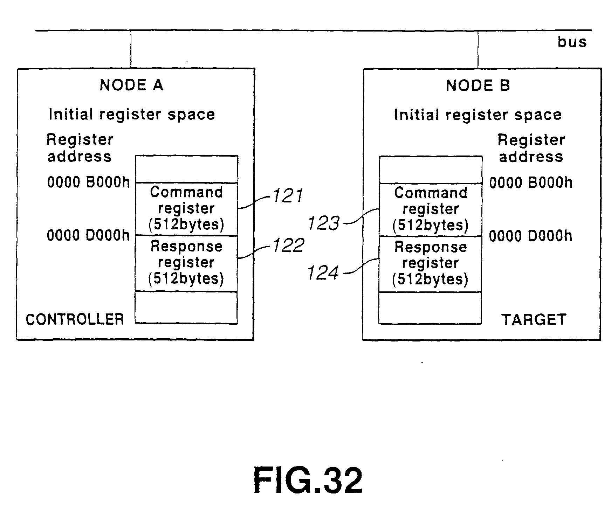

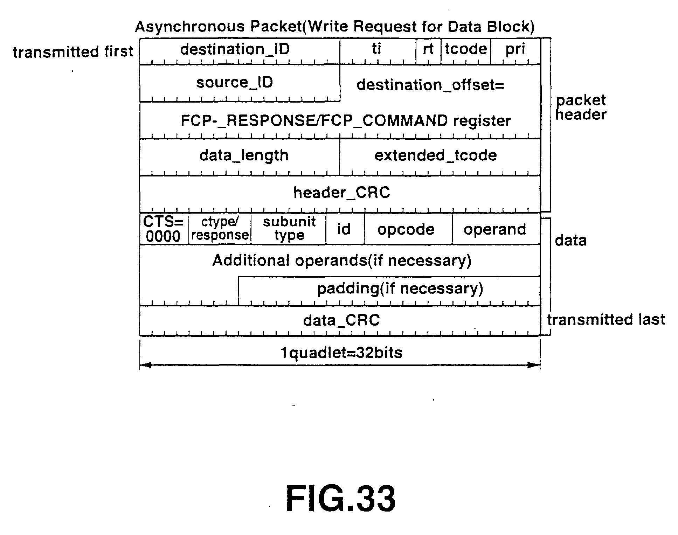

FIG. 32 is a more detailed illustration of the relationship between an FCP command and a response to it. Referring to FIG. 32, node A and node B are connected to each other by way of an IEEE1394 bus. The node A operates as controller and the node B operates as target. Each of the nodes A and B is provided with a 512-byte command register and a 512-byte response register. As shown in FIG. 32, the controller delivers an instruction to the target by writing a command message into the command register 123 of the target. In return, the target delivers a response to the instruction to the controller by writing a response message into the response register 122 of the controller. Then, controller information will be exchanged between them for those two messages. Referring to FIG. 33, CTS in the data field describes the type of the command set to be transmitted by the FCP.

FIG. 33 is a schematic illustration of the data structure of a packet of an AV/C command. An AV/C command set is used to control AV devices, whose CTS (ID of the command set) is "0000". An AV/C command frame and an AV/C response frame are exchanged between two nodes by using the FCP. In order to avoid charging the bus and the AV devices with a heavy load, the response to a command is realized within 100ms. As shown in FIG. 33, the data of an asynchronous packet comprises a quadlet = 32 bits that are arranged horizontally. In FIG. 33, the upper half shows the header of the packet and the lower half shows the data block of the packet, while destination_ID shows the destination of the packet.

In FIG. 33, CTS is the ID of the command set, which is equal to "0000" in the case of an AV/C command set. If the packet contains a command, the field of ctype/response shows the category of the function of the command. If, on the other, the packet contains a response, the field of ctype/response shows the result of processing the command. Roughly, four types of commands are defined and they include (1) commands (CONTROL) for controlling the functional feature from outside, (2) command (STATUS) for inquiring the status of a specific functional feature from outside, (3) commands (GENERAL INQUIRY) for inquiring the presence or absence of support for opcode and those (SPECIFIC INQUIRY) for inquiring the presence or absence of support for opcode and operands) and (4) commands (NOTIFY) for requesting a notification on the change in the status from outisde.

The response to a command may vary depending on the type of command. The response to a CONTROL command may be NOT IMPLEMENTED, ACCEPTED, REJECTED or INTERIM. The response to a STATUS command may be NOT IMPLEMENTED, REJECTED, IN TRANSITION or STABLE. The response to a GENERAL INQUIRY or SPECIFIC INQUIRY command may be IMPLEMENTED or NOT IMPLEMENTED. Finally, the response to a NOTIFY command may be NOT IMPLEMENTED, REJECTED, INTERIM or CHANGED.

Referring to FIG. 33, the field of subunit type is provided to identify the function of the subunit in the device, which may be Tape Recorder/Player or Tuner. If a plurality of subunits of a same type exist, they are discriminated by means of respective subunit ID that are used for addressing. The field of opcode is provided to show indicate command and that of operand shows the parameter of the command. The field of Additional operands and that of padding are used additionally whenever necessary. The field of data CRC (cyclic redundancy check) is used for an error check during a data transmission.

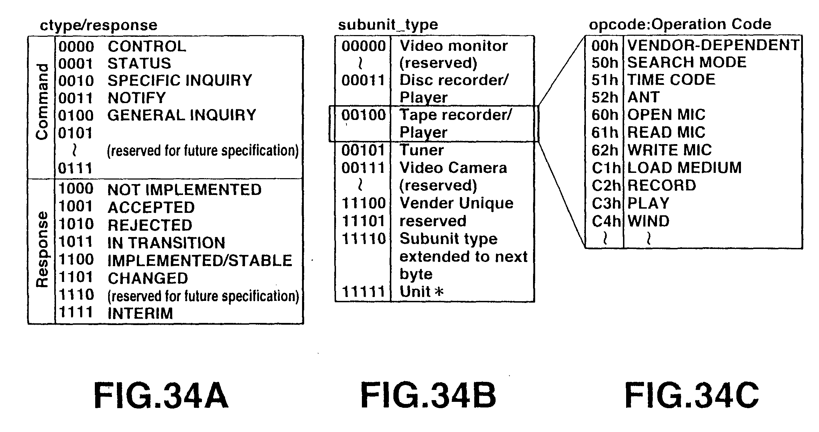

FIGS. 34A through 34C are schematic illustrations of specific examples of AV/C commands. FIG. 34A shows an example of ctype/response. In FIG. 34A, the upper half shows commands and the lower half shows response thereto. Referring to FIG. 34A, "0000", "0001", "0010", "0011" and "0100" are allocated respectively to CONTROL, STATUS, SPECIFIC INQUIRY, NOTIFY and GENERAL INQUIRY, while "0101" and "0111" are reserved for a use in the future. Additionally, "1000", "1001", "1010", "1011", "1100", "1101" and "1111" are allocated respectively to NOT IMPLEMENTED, ACCEPTED, REJECTED, IN TRANSITION, IMPLEMENTED/STABLE, CHANGED and INTERIM. "1110" is reserved for a use in the future.

FIG. 34B shows an example of subunit type. In FIG. 34B, "00000", "00011", "00100", "00101", "00111", "11100" and "11110" are allocated respectively to Video Monitor, Disc Recorder/Player, Tape Recorder/Player, Tuner, Video Camera, Vendor unique and subunit type extended to next byte. While "11111" is allocated to unit, it is used to something to be sent to the device such as ON/OFF of the power supply.

FIG. 34C shows an example of opcode. An opcode table is provided for each subunit type and the example shown in FIG. 34C is one that is used when the subunit type is Tape Recorder/Player. An operand is defined for each opcode. In this example, "00h", "50h", "51h", "52h", "60h, "61h", "62h", "C1h", C2h", C3h" and "C4h" are allocated respectively to VENDOR-DEPENDENT, SEARCH MODE, TIME CODE, ATN, OPEN MIC, READ MIC, WRITE MIC, LOAD MEDIUM, RECORD, PLAY AND WIND.

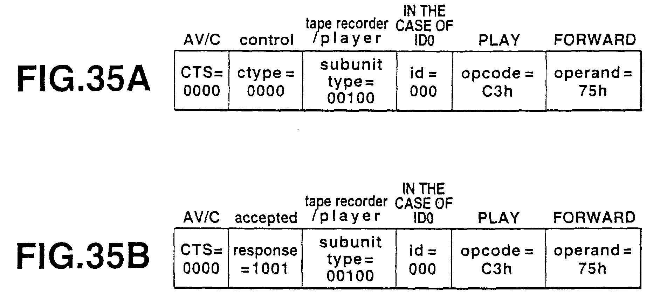

FIGS. 35A and 35B are schematic illustrations exemplary responses to an AV/C command in the case of a digital video cassette recorder (DVCR). When the DVCR (target) is used for replaying, the controller transmits a command as shown in FIG. 35A to the target. The command is CTS = "0000" because an AV/C command set is used. As shown in FIG. 35B, ctype = "0000" because a command for controlling the functional feature from outside (CONTROL) is used for ctype. Since the device is a Tape recorder/Player, subunit type = "00100" (see FIG. 35B). The example shows ID in the case of ID0, where ID = 000. Then, "C3h" representing replay is shown for opcode (see FIG. 34C). Additionally, "75h" representing FORWARD is shown for operand. As the device is operated for replaying, the target sends a response as shown in FIG. 35B back to the controller. Note that response = "1001" is shown because "accepted" is contained in the response (see FIG. 35A). Since the response of FIG. 35B is identical with that of FIG. 35A except the field of "response", it will no longer be described here.

Now, as a mode of carrying out the invention, an operation of the recording/reproduction device of FIG. 1 utilizing the properties of a serial bus 2 conforming to the IEEE 1394 Standard will be discussed below.

A/D described above, the magneto-optical disc device 1 or the optical disc device 2 of the recording/reproduction device sends out a data stream to the serial bus 4 and the amplifier 3 receives the stream on the serial bus 4 and outputs it. The amplifier 3 reproduces the data transmitted to it in synchronism with the operation of the magneto-optical disc device 1 or the optical disc device 2.

Since the following description on an operation applies to both the magneto-optical disc device 1 and the optical disc device 2, it will be made in terms of the magneto-optical disc device 1 for the purpose of simplicity.

As a first mode of carrying out the invention, a method applicable to a reproducing operation of the amplifier 3 that is conducted in synchronism with a corresponding operation of the magneto-optical disc device 1 by monitoring the isochronous communication on the serial bus will be described below.

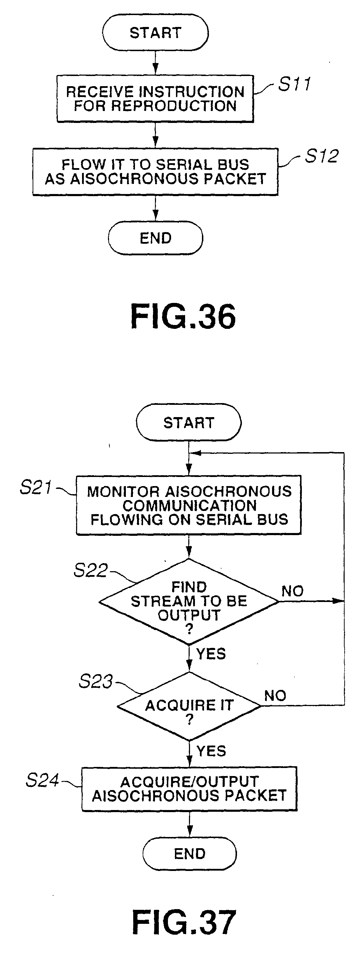

Referring to FIG. 36, the magneto-optical disc device 1 receives an instruction for a reproducing operation in the form of an AV/C command in Step S11. More specifically, the CPU 11 of the magneto-optical disc device 1 shown in FIG. 2 receives an instruction in the form of an AV/C command by way of the interface 10 connected to the serial bus 4. Note that the AV/C command is transmitted from a controller (not shown) connected to the serial bus 4.

Then, in Step S12, upon receiving the instruction and if possible, the magneto-optical disc device 1 transmits an isochronous packet containing the data reproduced from the magneto-optic disc to the serial bus 4.

The CPU 11 is adapted to read data from a magneto-optical disc that may be an MD by means of an optical pickup 14. The data read by the CPU 11 are then turned into PCM audio data by the recording/reproduction system 13 and the encoder/decoder 16. The PCM audio data are then transmitted to the serial bus 40 by way of the interface 10 as an isochronous packet.

If it is impossible for the recording/reproduction device to start reproducing data because, for example, it is not provided with an magneto-optical disc device 1, the CPU 11 transmits an AV/C command to tell that the attempt for transmitting the data has failed. The command is also transmitted to the serial bus 4 by way of the interface 10.

Now, referring to FIG. 37, in Step S21, the amplifier 3 constantly monitors the serial bus 4 for an isochronous packet. More specifically, the CPU 31 of the amplifier 3 monitors the serial bus 4 for an isochronous packet by way of the interface 35 connected to the serial bus 4.

If the CPU 31 finds an isochronous packet it can outputs in Step S22, it proceeds to Step S23. If, on the other hand, the CPU 31 does not find any isochronous packet it can outputs, it returns to Step S21. Due to Step S22, data of the type that the amplifier 3 cannot output will be excluded from the operation of the recording/reproduction device.

If the amplifier 3 can output an isochronous packet or not is determined on the basis of the CIP data as shown in A of FIG. 19. The CPU 31 operating as means for determining if the amplifier 3 can output an isochronous packet or not reads the channels available register possessed by the isochronous resource manager of the serial bus 4 to find out the number of the channel through which an isochronous packet is output. Then, it confirms the CIP corresponding to the number of the channel through which an isochronous packet is output.

In the case of the CIP header shown in A of FIG. 19, the hatched area is used to determine if the CPU 31 can output an isochronous packet or not. More specifically, if the requirements of
EOH_0 = 0,
Form_0 = 0,
DBS = 02₁₆,
FN = 0₁₆,
QPC = 0₁₆,
SPH = 0₁₆,
Rsv = 0₁₆,
EOH_1 = 1,
Form_1 = 0,
FMT = 10₁₆ and
FDF = 00₁₆ through 02₁₆
are met in the CIP header, it is determined that the amplifier 3 can output an isochronous packet.

As described earlier, the requirement of
DBS = 02₁₆ = 00000010₂ signifies that, if met, the size of the data block is 2 quadlets. The requirement of
FN = 0₁₆ signifies that, if met, the source packet is not divided into a plurality of data blocks as shown in FIG. 20. The requirement of
QPC = 0₁₆ signifies that, if met, the number of quadlets to be annexed to each source packet is equal to 0. The requirement of
SPH = 0₁₆ signifies that, if met, the packet does not have any source packet header. The requirement of
FMP = 10₁₆ = 00010000₂ signifies that, if met, it indicates audio/music data that can be output by the amplifier 3 in this mode of carrying out the invention, although the data format is "reserved" as shown in FIG. 23. The requirement of
FDF = 00₁₆ through 02₁₆ = 00000000₂ through 00000010₂ indicates, if met, AM824 data with sampling frequencies of 32kHz (00), 44.1kHz (01) and 48kHz (02) in the field defined for a format that satisfies the requirement of
FMP = 10₁₆ = 00010000₂.

Then, in Step S23, the CPU 31 of the amplifier 3 determines if the isochronous packet that is determined to be capable of being output in Step S22 can be acquired or not. In order for the amplifier 3 to be able of acquire the isochronous packet, it is necessary that the amplifier 3 is not occupied by some other channel. The CPU proceeds to Step S24 if it is determined that the isochronous packet can be output, whereas the CPU 31 returns to Step S21 if it is determined that the isochronous packet cannot be output.

Then, in Step S24, the CPU 31 of the amplifier 3 acquires and outputs the isochronous packet. More specifically, it is so controlled by the CPU 31 that the PCM audio data of the isochronous packet obtained by way of the interface 35 are output by way of the D/A conversion circuit 36.

The acquisition of the isochronous packet by the amplifier 3 is carried out either by connecting the output plug of the output device indicated by SID of CIP header and its own plug on a point-to-point connection basis or by connecting the former to the channel being monitored on a broadcast-in connection basis.

Now, a method of monitoring the status of the magneto-optical disc device 1 by means of the amplifier 3 and, as the magneto-optical disc device 1 starts transmitting an isochronous packet, acquiring and outputting the packet it will be described as a second mode of carrying out the invention.

Note that the parts of the operation conducted in the second mode of carrying out the invention that are same as those of the first mode of carrying out the invention will not be described any further for the purpose of simplification.

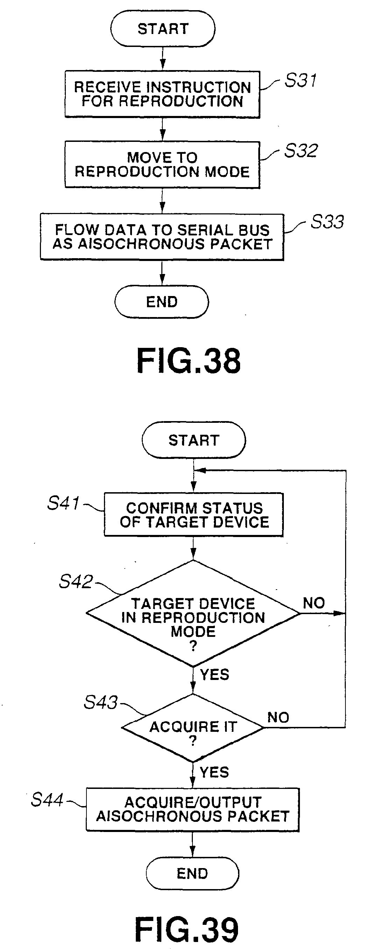

As shown in FIG. 38, the magneto-optical disc device 1 receives an AV/C command in Step S31 and moves into a replay mode in Step S32. Then, in Step S33, it outputs the reproduced data to the serial bus 4 as isochronous packet.

Then, as shown in FIG. 39, the amplifier 3 confirms the status of the magneto-optical disc device 1 as that of target in Step S41. The amplifier 3 acquires the right of reading the disc status descriptor by using READ OPEN that is one of the subfunctions of the OPEN DESCRIPTOR command for each connected device and an AV/C command.

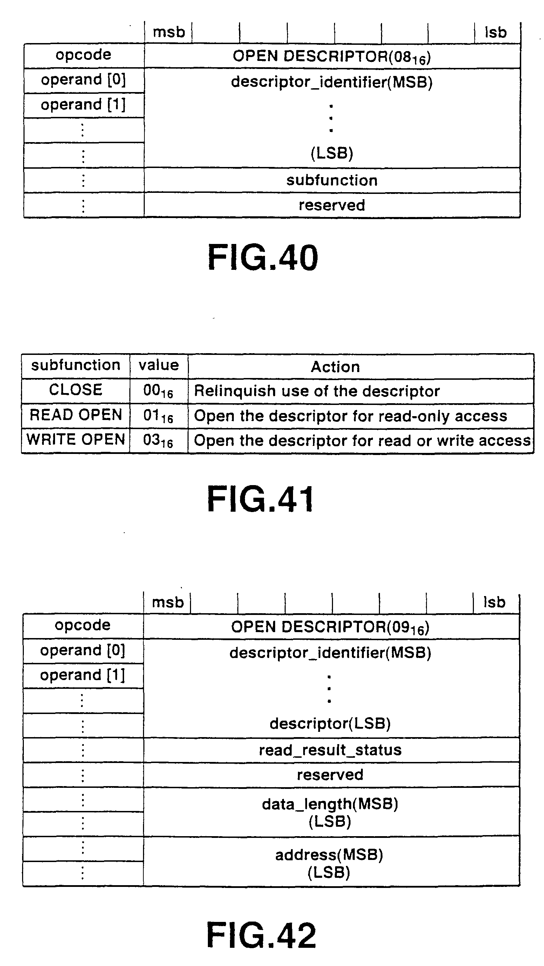

Then, as shown in FIG. 40, OPEN DESCRIPTOR command is in a format having opcode for storing OPEN DESCRIPTOR for acquiring the right of accessing the descriptor and operand containing descriptor_identifier for identifying the data to be accessed and the subfunction for indicating the operation to be executed by the target.

As shown in FIG. 41, the operation to be executed by the target is determined by the subfunction. More specifically, CLOSE (00₁₆) cancels the use of the descriptor and READ OPEN (00₁₆) opens the descriptor exclusively for reading and WRITE OPEN (00₁₆) opens the descriptor for both reading and writing.

Then, in Step S42, the amplifier 3 reads Disc Status Descriptor from Source Plug Status Area Information Block-Plug Status Information Block-Operation Mode Information Block and confirms that it is in the replay mode to be used for the ongoing reproduction.

As shown in FIG. 42, OPEN DESCRIPTOR command is in a format having opcode for storing READ DESCRIPTOR for reading data from the descriptor and operand containing descriptor_identifier for identifying the data to be accessed, read_result_descriptor read out so as to be stored by the target, data_length indicating the length of the data read by the target and the starting point address to be read.

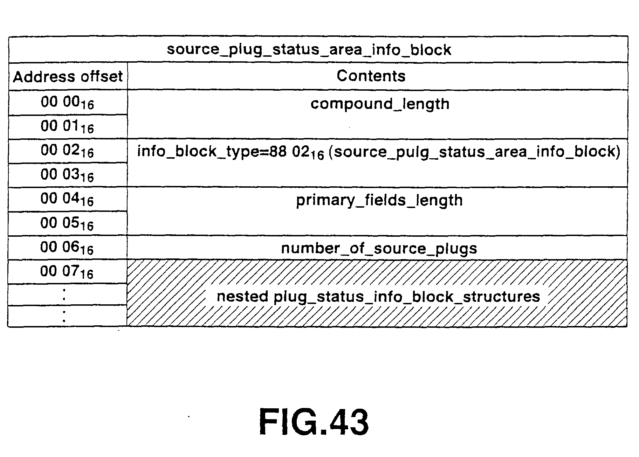

As shown in FIG. 43, Source Plug Status Area Information Block (source_plug_status_area_info_block) contains compound_length indicating the number of the remaining bytes of the block, "8802₁₆" indicating source_plug_status_area_information_block as info_block_type, primary_fields_length, number_of_source_plug and plug_status_info_block.

The number_of_source_plug field is used to identify the number of source plugs and indicates the number of plug status information blocks (plug_status_info_block) nested in the information block (info_block). On the other hand, each of the plug status information blocks (plug_status_info_block) indicates the status of the corresponding plug.

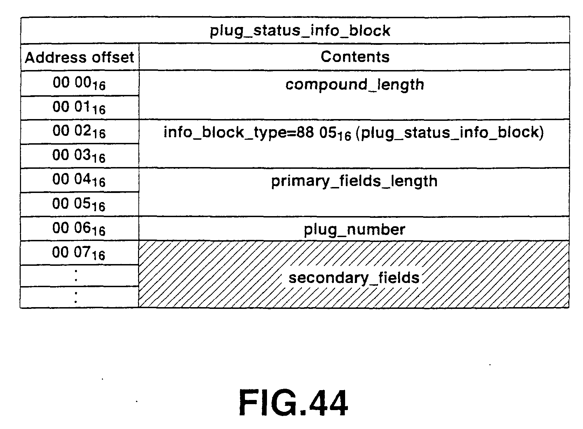

As shown in FIG. 44, Plug Status Information Block (plug_status_info_block) contains compound_length, "880516" indicating plug_status_info_block as info_block_type, primary_field_length, plug_number and secondary_fields, which is an info block defined so as to be nested in plug_status_info_block after the plug_number field.

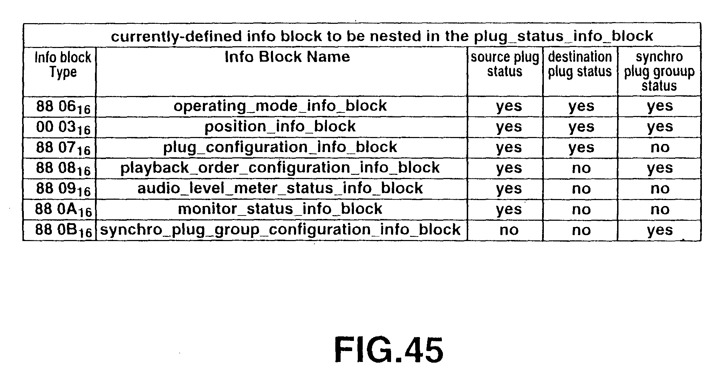

As shown in FIG. 45, the info block following this info block is defined so as to be effective to Plug Status Information Block. The currently defined plug status information blocks (plug_status_info_block) include one containing "8806₁₆" for Info Block Type and "operating_mode_info_block" for Infor Block Name.

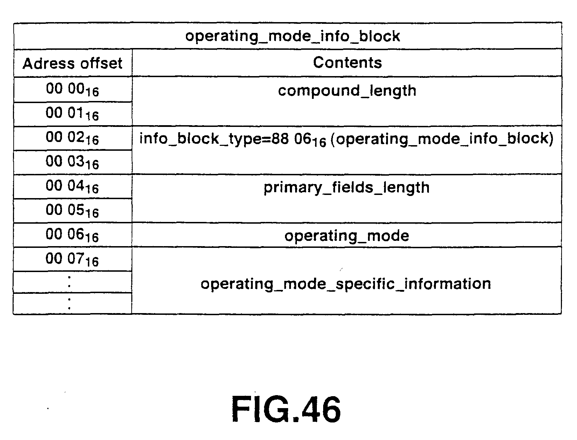

As shown in FIG. 46, Operating Mode Information Block for indicating the operating mode contains compound_length, "8806₁₆" indicating operating_mode_info_block as info_block_type, primary_field_length and operating_mode_specific_information.

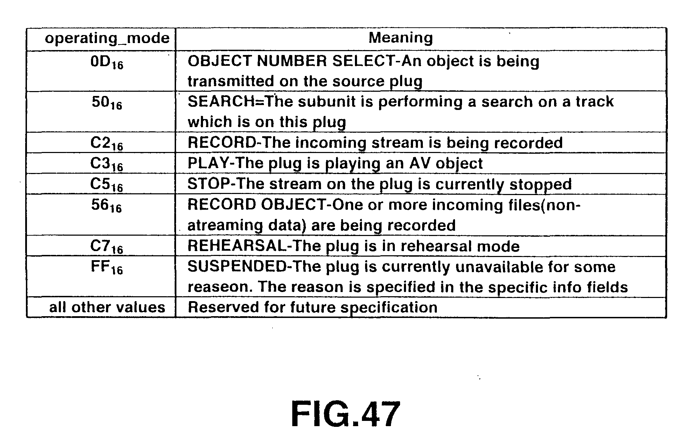

As shown in FIG. 47, the operating_mode field contains "C3₁₆" indicating that the plug is replaying (play) the AV object. Therefore, it is possible to detect if the current mode is a replay mode or not by reading this operating_mode.

When the necessary information is acquired, the amplifier 3 closes the disc status descriptor by means of CLOSE command and releases the right of reading.

Then, it proceeds to Step S43 when the target device is in a replay mode, whereas it returns to Step S41 when the target device is not in a replay mode.

In Step S43, the amplifier 3 determines if it should acquire the isochronous packet or not. The amplifier 3 proceeds to Step S44 if it is determined that it should acquire the isochronous packet, whereas it returns to Step S41 if it is determined that it should not acquire the isochronous packet.

In Step S44, the amplifier 3 acquires the isochronous packet transmitted from the magneto-optical disc device 1 and outputs it. The amplifier 3 can input data either by connecting the output plug of the target device and its own input plug on a point-to-point connection basis or by connecting its own input plug to the output channel indicated by the output plug of the target device on a broadcast-in connection basis.

Note that, in this second mode of carrying out the invention, it is possible to determine if the packet can be output or not on the basis of the value of the hatched area in the CIP header shown in A of FIG. 19 as in the case of the first mode of carrying out the invention.

Now, a third mode of carrying out the invention will be described in terms of a method of notifying the amplifier 3 of the fact that the magneto-optical disc device 1 for transmitting an isochronous packet is actually transmitting a stream so that the amplifier can acquire the stream and output it according to the notification.

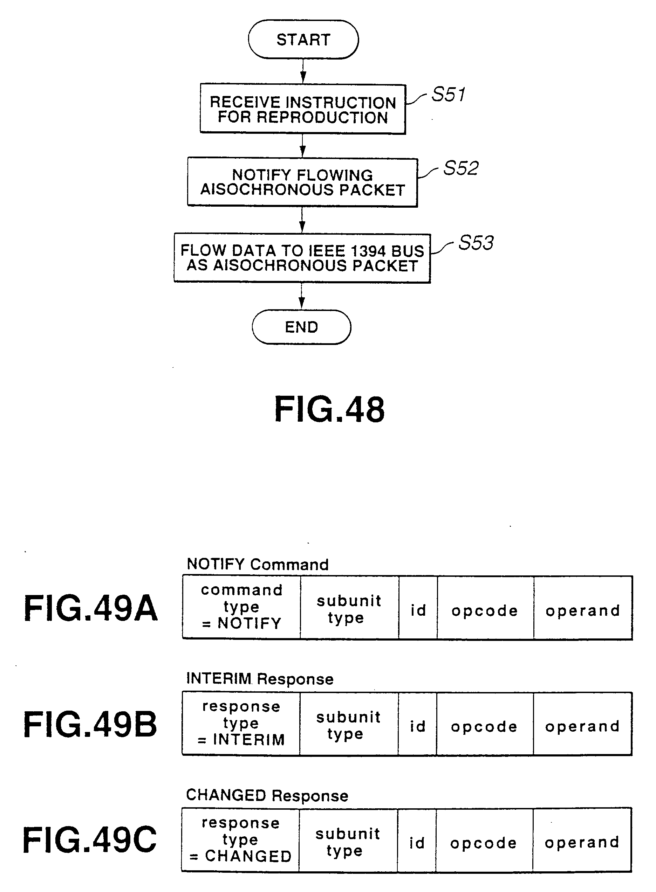

As shown in FIG. 48, the magneto-optical disc device 1 receives an instruction for data reproduction in the form of an AV/C command in Step S51 and notifies the amplifier 3 of the fact that it is transmitting an isochronous packet in Step S52. Typically, NOTIFY command that is one of available AV/C commands can be used for the notification.

FIG. 49 is a schematic illustration of the relationship between NOTIFY command and a response to it. NOTIFY command (A in FIG. 49) is a command for requesting a notification on the change in the status to be made to the outside and therefore can be used to detect any change in the status of the target device (magneto-optical disc device 1). Upon receiving the NOTIFY command, the target device returns INTERIM response (B in FIG. 49) to the controller device (amplifier 3). If there arises a change in the status of the target device, the target device returns CHANGED response (C in FIG. 49) to the controller device.

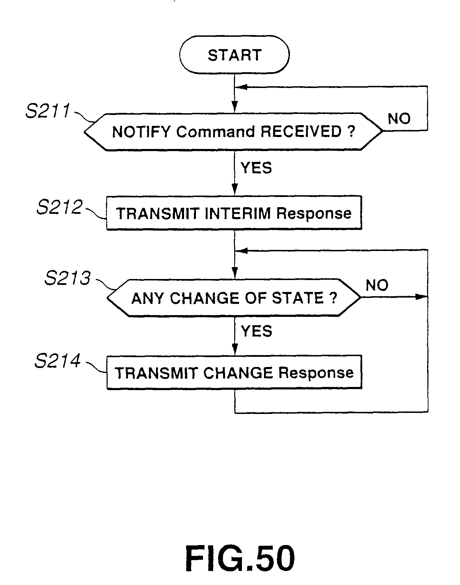

FIG. 50 is a flow chart of a processing operation of the target device to be performed for the above process. In Step S211, the target device, or the magneto-optical disc device 1, determines if it receives NOTIFY command from the controller device, or the amplifier 3. More specifically, NOTIFY command is Disc Status NOTIFY command.

Upon receiving the NOTIFY command, the magneto-optical disc device 1 transmits INTERIM command to the amplifier 3. If the magneto-optical disc device 1 does not receive NOTIFY command, it returns to Step S211.

After transmitting INTER command in Step S212, the magneto-optical disc device 1 determines if there is any change in the status or not in Step S213. If an AV/C command is transmitted as an instruction for a reproducing operation to the magneto-optical disc device 1 to change the status, the magneto-optical disc device 1 proceeds to Step S214, where it transmits CHANGE command to indicate the change in the status. If there is not any change in the status, the magneto-optical disc device 1 returns to Step S213.

In Step S53 shown in FIG. 48, the magneto-optical disc device 1 transmits the reproduced data to the serial bus 4 as isochronous packet.

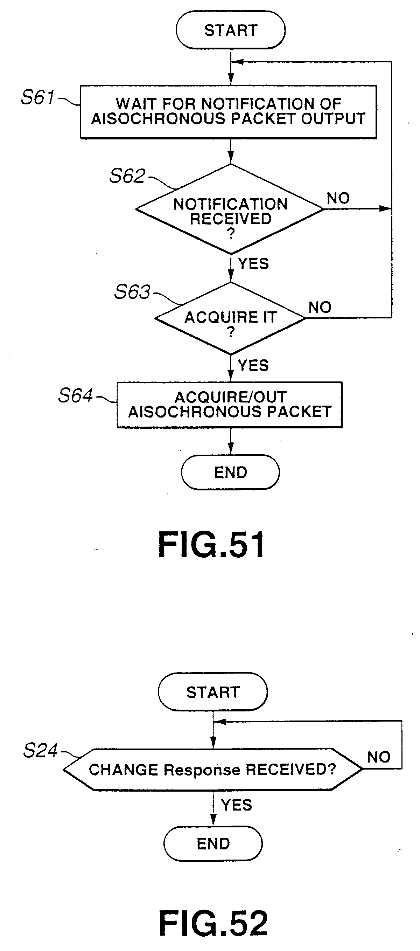

As shown in FIG. 51, the amplifier 3 waits for the output of the isochronous packet from the magneto-optical disc device 1 in Step S61. As described above, this notification is made by means of CHANGE command that is designed to be used to notify that the magneto-optical disc device is moved into a replay status.

Before starting the operation of Step S61, it is necessary for the amplifier 3 to transmits NOTIFY command to the magneto-optical disc device 1 to confirm that INTERIM RESPONSE is sent back as response. Therefore, this step corresponds to Step S211 and Step S212 in FIG. 50.

Then, in Step S62, the amplifier 3 determines if it receives a notification from the magneto-optical disc device 1 telling that the latter has already started a replay operation or not. The amplifier 3 proceeds to Step S63 when it receives such a notification but returns to Step S61 when it does.

More specifically, as shown in Step S221 in FIG. 52, the amplifier 3 determines if it receives CHANG RESPONSE indicating a change in the status from the magneto-optical disc device 1 or not in Step S62. It may be needless to say that the change in the status, if ever, should correspond to the replay operation to be conducted.

Then, in Step S63, the amplifier 3 determines if it is in a status where it can receive an isochronous stream or not. If it is determined in Step S62 that the amplifier 3 can receive an isochronous stream, it proceeds to Step S64, where it acquires and outputs the isochronous stream. If, on the other hand, it is determined in Step S62 that the amplifier cannot receive an isochronous stream, it returns to the first step of Step S61.

Thus, in this mode of carrying out the invention, when devices connected to the network of the serial bus 4 exchange a stream in a synchronized way, the operation of exchanging the stream is performed not under the control of a specific controller but in a cooperative and coordinated manner.

While a situation where a magneto-optical disc device, an optical disc device and an amplifier are connected to a serial bus is used in the above description of the preferred modes of carrying out the invention, the present invention is by no means limited thereto and can be applied to any situation where data are exchanged among devices connected to a serial bus and having an interface conforming to the standard of the serial bus.

## Claims

1. A communication system of a plurality of devices connected to a predetermined bus, said system comprising:
a first device adapted to transmit data as a periodical packet to the bus;
a second device having a packet transmission monitoring means for monitoring a transmission of a periodical packet from said first device by way of the bus and a packet receiving means for receiving the periodical packet from said first device; and
upon detecting the transmission of a packet available to said packet transmission monitoring means, said second device starts receiving said packet by said receiving means.

2. The communication system according to claim 1, wherein said packet is an isochronous packet transmitted periodically by way of a channel having a predetermined band width.

3. The communication system according to claim 1, wherein said packet has a field for describing the type of the format of the packet and said packet transmission monitoring means determines whether the packet is available or not on the basis of the value in said field.

4. A communication system of a plurality of devices connected to a predetermined bus, said system comprising:
a first device adapted to transmit data as a periodical packet to the bus;
a second device having a status monitoring means for monitoring that status of said first device and a packet receiving means for receiving the periodical packet from said first device; and
upon detecting the status of said first device read for transmitting a periodical packet, said second device starts receiving said packets by said receiving means.

5. The communication system according to claim 4, wherein said packet is an isochronous packet transmitted periodically by way of a channel having a predetermined band width.

6. The communication system according to claim 4, wherein said status is an operation mode of said first device and, upon detecting the operation mode to be for replaying by said status monitoring means, the second device starts receiving said packet by said receiving means.

7. The communication system according to claim 6, wherein said status monitoring means acquires from said first device the reading right for reading the status of said first device and releases the reading right after reading said status.

8. The communication system according to claim 4, wherein said second device further has a determining means for determining whether the packet is available or not on the basis of the header of said packet.

9. A communication device to be connected to some other communication device by way of a predetermined bus, said communication device comprising:
a packet transmission monitoring means for monitoring any transmission of a periodical packet from said other communication device by way of a bus;
a packet receiving means for receiving a periodical packet from said other communication device; and
a control means for causing said packet receiving means to receive the periodical packet from said other communication device upon detecting the packet as an available packet by said packet transmission monitoring means.

10. The communication device according to claim 9, wherein said packet is an isochronous packet transmitted periodically by way of a channel having a predetermined band width.

11. The communication device according to claim 9, wherein said packet has a field for describing the type of the format of the packet and said packet transmission monitoring means determines whether the packet is available or not on the basis of the value in said field.

12. A communication device to be connected to some other communication device by way of a predetermined bus, said communication device comprising:
a status monitoring means for monitoring the status of said other communication device;
a packet receiving means for receiving a packet from said other communication device; and
a control means for causing said packet receiving means to receive a packet by said packet receiving means upon detecting the status of said other communication device of being ready for transmitting a periodical packet.

13. The communication device according to claim 12, wherein said packet is an isochronous packet transmitted periodically by way of a channel having a predetermined band width.

14. The communication device according to claim 12, wherein said status is an operation mode of said first device and, upon detecting the operation mode to be for replaying by said status monitoring means, the second device starts receiving said packet by said receiving means.

15. The communication device according to claim 12, wherein said status monitoring means acquires from said first device the reading right for reading the status of said first device and releases the reading right after reading said status.

16. The communication device according to claim 12, wherein said second device further has a determining means for determining whether the packet is available or not on the basis of the header of said packet.

17. A communication method for data communication to be conducted among devices connected to each other by way of a predetermined bus, said method comprising:
a packet transmittimg step of transmitting data to the data transmission bus as a periodical packet;
a monitoring step of monitoring the periodical packet being transmitted in said first step; and
a packet receiving of starting to receive the packet upon detecting the transmission of the packet as a packet available to it.

18. The communication method according to claim 17, wherein said packet is an isochronous packet transmitted periodically by way of a channel having a predetermined band width.

19. A communication method for data communication to be conducted among devices connected to each other by way of a predetermined bus, said method comprising:
a packet transmitting step of transmitting data to a data transmission bus as a periodical packet;
a status detecting step of monitoring the status of said packet transmitting step and detecting the status ready for transmitting a periodical packet in said packet transmitting step; and
a packet receiving step of starting to receive the packet upon detecting the status of said first step of being ready for transmitting a periodical packet.

20. The communication method according to claim 19, wherein said packet is an isochronous packet transmitted periodically by way of a channel having a predetermined band width.

21. A communication system of a plurality of communication devices connected to a predetermined bus, said communication system comprising:
a first communication device adapted to transmit data as a periodical packet to said bus;
a second communication device having a packet receiving means for receiving the periodical packet transmitted from said first device;
said first transmission device having:
a receiving means for receiving the notification request transmitted from said second device and requesting a notification of the status of said first communication device of being ready to start transmitting packets;
a notification command transmitting means for transmitting a notification command for notifying the status of being ready to start transmitting packets upon receiving said notification request command and coming into a status of being ready to start transmitting a packet; and
a data transmitting means for transmitting data to said second communication device as a packet;
said second transmission device having:
a notification request command transmitting means for generating a notification request command for requesting a notification of the status of said first communication device of being ready to start transmitting a packet and transmitting it to said first communication device;
a notification command receiving means for receiving a notification command transmitted from said first communication means to notify the status of said first communication device of being ready to start transmitting a packet in response to said notification request command; and
a packet receiving means adapted to start receiving a packet from said first device according to the received notification command.

22. The communication system according to claim 21, wherein said packet is an isochronous packet transmitted periodically by way of a channel having a predetermined band width.

23. The communication system according to claim 21, wherein said notification command contains status information on said first communication device and said second communication device confirms the status of said first communication device on the basis of the notification command.

24. The communication system according to claim 21, wherein said status information indicates the operation mode of said first communication device and said second communication device starts receiving said packet upon detecting the operation mode to be for replaying.

25. A communication device to be connected to some other communication device adapted to transmit a packet by way of a predetermined bus, said communication device comprising:
a notification request command transmitting means for generating a notification request command for requesting a notification from said other communication device of the status thereof of being ready to start transmitting a packet and transmitting it to said other communication device;
a notification command receiving means for receiving the notification command transmitted from said other communication device for notifying the status of said other communication device of being ready to start transmitting a packet in response to said notification request command; and
a packet receiving means adapted to start receiving a packet from said other communication device according to said received notification command.

26. The communication device according to claim 25, wherein said packet is an isochronous packet transmitted periodically by way of a channel having a predetermined band width.

27. The communication device according to claim 26, wherein said notification command contains status information on said first communication device and said second communication device confirms the status of said first communication device on the basis of the notification command.

28. The communication system according to claim 27, wherein said status information indicates the operation mode of said first communication device and said second communication device starts receiving said packet upon detecting the operation mode to be for replaying.

29. A communication device for transmitting data to some other communication device, said communication device comprising:
a receiving means for receiving the notification request command transmitted from said other communication device for requesting a notification of the status of said communication device of being ready to start transmitting a packet;
a notification command transmitting means for transmitting a notification command for notifying the status thereof of being ready to start transmitting a packet upon receiving said notification request command and becoming ready to start transmitting a packet; and
a data transmitting means for transmitting data to said other communication device as a packet.

30. The communication device according to claim 29, wherein said packet is an isochronous packet transmitted periodically by way of a channel having a predetermined band width.

31. The communication device according to claim 29, wherein said notification command contains status information on said communication device.

32. The communication system according to claim 31, wherein said status information indicates the operation mode of said communication device.

33. A communication method for communicating with some other communication device adapted to transmit a packet by way of a predetermined bus, said communication method comprising:
a notification command transmitting step of generating a notification request command for requesting a notification of the status of said other communication device of being ready to start transmitting a packet and transmitting said request to said other communication device;
a notification command receiving step of receiving the notification command transmitted from said other communication device for notifying the status thereof of being ready to start transmitting a packet in response to said notification request command; and
a packet receiving step of starting to receive a packet from said other communication device according to said received notification command.

34. The communication method according to claim 33, wherein said packet is an isochronous packet transmitted periodically by way of a channel having a predetermined band width.

35. The communication method according to claim 34, wherein said notification command contains status information on said first communication device and said second communication device confirms the status of said first communication device on the basis of the notification command.

36. The communication method according to claim 34, wherein said status information indicates the operation mode of said first communication device and said second communication device starts receiving said packet upon detecting the operation mode to be for replaying.

37. A communication method for transmitting data from a communication device to some other communication device as packet, said communication method comprising:
a receiving step of receiving the notification request command transmitted from said other communication device for requesting a notification of the status of said communication device of being ready to start transmitting a packet;
a notification command transmitting step of receiving said notification request command and transmitting a notification command for notifying the status of said communication device of being ready to start transmitting a packet upon becoming ready to start transmitting a packet; and
a data transmitting step of transmitting data to said other communication device as a packet.

38. The communication method according to claim 37, wherein said packet is an isochronous packet transmitted periodically by way of a channel having a predetermined band width.

39. The communication device according to claim 37, wherein said notification command contains status information on said communication device.

40. The communication system according to claim 37, wherein said status information indicates the operation mode of said communication device.
